(19) Europäisches Patentamt
European Patent Office
Office européen des brevets

(11) Veröffentlichungsnummer: **0 275 255**
**B1**

(12) # EUROPÄISCHE PATENTSCHRIFT

(45) Veröffentlichungstag der Patentschrift: **27.12.90**

(51) Int. Cl.5: **C 08 F 220/12,** C 09 D 133/04

(21) Anmeldenummer: **86905271.2**

(22) Anmeldetag: **20.08.86**

(86) Internationale Anmeldenummer:
**PCT/EP86/00488**

(87) Internationale Veröffentlichungsnummer:
**WO 87/02041 09.04.87 Gazette 87/08**

(54) **LÖSLICHES CARBOXYLGRUPPENHALTIGES ACRYLATCOPOLYMERISAT, VERFAHREN ZU SEINER HERSTELLUNG UND ÜBERZUGSMITTEL AUF DER BASIS DES ACRYLATCOPOLYMERISATS.**

(30) Priorität: **30.09.85 DE 3534858**

(43) Veröffentlichungstag der Anmeldung:
**27.07.88 Patentblatt 88/30**

(45) Bekanntmachung des Hinweises auf die Patenterteilung:
**27.12.90 Patentblatt 90/52**

(84) Benannte Vertragsstaaten:
**AT BE CH DE FR GB IT LI NL SE**

(56) Entgegenhaltungen:
**EP-A-0 103 199**
**FR-A-1 224 066**
**FR-A-1 521 776**

(73) Patentinhaber: **BASF Lacke + Farben Aktiengesellschaft**
**Max-Winkelmann-Strasse 80**
**D-4400 Münster (DE)**

(72) Erfinder: **JUNG, Werner**
**Uhrwerkerstrasse 65**
**D-4715 Ascheberg (DE)**
Erfinder: **SIEVERS, Axel**
**Tulpenweg 55-57**
**D-4400 Münster (DE)**

(74) Vertreter: **Leifert, Elmar, Dr.**
**BASF Lacke + Farben AG Patentabteilung**
**Max-Winkelmann-Strasse 80 Postfach 61 23**
**D-4400 Münster (DE)**

**EP 0 275 255 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreiben**

Lösliches vorvernehtes carboxylgruppenhaltiges Acrylatcopolymerisat, Verfahren zu seiner Herstellung und Überzugsmittel auf der Basis des Acrylatcopolymerisats.

Die Erfindung betrifft ein lösliches vorvernehts Acrylatcopolymerisat, welches erhältlich ist durch Copolymerisation von Monomeren mit mindestens zwei polymerisierbaren, olefinisch ungesättigten Doppelbindungen, funktionelle Gruppen tragenden Monomeren und weiteren polymerisierbaren Monomern mit einer olefinisch ungesättigten Doppelbindung, wobei das Acrylatcopolymerisat Carboxylgruppen enthält.

Aus der gattungsbildenden EP—A—103 199 ist ein Acrylatcopolymerisat bekannt, welches erhalten worden ist durch Copolymerisation von 10 bis 95 Gewichts-% t-Butylacrylat, 0,1 bis 3 Gewichts-% polyfunktioneller Monomerer, wie beispielsweise Trimethylolpropantriacrylat, 1 bis 30 Gewichts-% Comonomerer mit einer funktionellen vernetzbaren Gruppe und 0 bis 80 Gewichts-% weiterer polymerisierbarer, ethylenisch ungesättigter Monomerer. Als Comonomere mit einer funktionellen vernetzbaren Gruppe werden u.a. carboxylgruppenhaltige Monomere, wie Acrylsäure und Methacrylsäure, genannt.

Aus der EP—A—103 199 ist weiterhin eine Überzugszusammensetzung bekannt, welche ein carboxylgruppenhaltiges, durch Einpolymerisieren von mehrfach ethylenisch ungesättigten Monomeren verzweigtes Acrylatcopolymerisat und ein Polyepoxid als Vernetzer enthält. Die beschriebenen verzweigten Acrylatcopolymerisate führen zu Überzügen mit guter Wetterbeständigkeit, insbesondere guter Feuchtigkeitsbeständigkeit, was auf den Gehalt an einpolymerisiertem t-Butylacrylat einerseits und auf den Gehalt von einpolymerisierten, mehrfach olefinisch ungesättigten Monomeren zurückzuführen ist.

Aus der EP—B—51 275 ist eine reaktive härtbare Bindemittelmischung bekannt auf der Basis von speziellen Polycarbonsäureeinheiten, basierend auf Polymerisations- und/oder Kondensationsprodukten, wobei Carboxylgruppen beispielsweise durch Addition von cyclischen Carbonsäureanhydrin an OH-Acrylate gebildet werden, und auf der Basis von aliphatischen oder cycloaliphatischen Epoxidverbindungen. Der Vorteil der härtbaren Bindemittelamischung besteht darin, daß ein Katalysator für die Carboxy- Epoxy-Vernetzung in Form von Metallsalzen neben dem Bindemittel vorliegt, so daß auf einen externen Katalysator verzichtet werden kann.

Aus der EP—A—123 793 ist eine bereits bei Raumtemperatur aushärtende Zusammensetzung bekannt, bestehend aus Polyepoxiden und Polymeren, welche Carboxylgruppen und tertiäre Aminogruppen enthalten und entstehen durch Reaktion von Säureanhydrid- und Carboxylgruppen enthaltenden Vinylpolymeren mit Verbindungen, die mindestens einen aktiven Wasserstoff, der zur Reaktion mit Säureanhydriden befähigt ist, und mindestens eine tertiare Aminogruppe enthalten, wie beispielsweise tertiäre Aminoalkohole. Die beschriebenen Zusammensetzungen haben den Vorteil, daß sie bereits bei Raumtemperatur aushärten, gute Benzin-, Wasser- und Alkalibeständigkeit aufweisen und daß keine unerwünschten Verfärbungen, die auf tertiäre Aminoverbindungen zurückzuführen sind, auftreten.

Die japanische Offenlegungsschrift 53 145/79 beschreibt Zusammensetzungen auf der Basis von Copolymerisaten mit tertiären Aminogruppen, Carboxylgruppen und Phosphorsäuregruppen sowie von aliphatischen Polyepoxiden. Die Zusammensetzungen härten bei relativ niedrigen Temperaturen aus und führen zu Filmen mit guter Lösungsmittelbeständigkeit und Wetterbeständigkeit.

Aus der DE—OS 26 35 177 sind Zusammensetzungen aus Acrylatharzen und Di- und Polyepoxiden bekannt. In die Acrylatharze sind α,β-ethylenisch ungesättigte Carbonsäuren einpolymerisiert, und die Harze haben eine Säurezahl von 70 bis 250. Die Zusammensetzungen weisen eine hohen Festkörpergehalt auf und zeigen gute Ergebnisse hinsichtlich mechanischer Eigenschaften, Chemikalien- und Lösungsmittelbeständigkeit sowie Korrosionsbeständigkeit.

Aus der JP—OS 76 338/77 ist eine Überzugszummensetzung bekannt, die erhältlich ist durch Mischen von Acrylatcopolymerisaten aus Acrylsäureestern, carboxylgruppenhaltigen Monomeren und Acrylmonomeren, die tertiären Stickstiff enthalten, wie beispielsweise Diethylaminoethylacrylat, mit Polyepoxiden. Die Überzugszusammensetzungen können bei niedrigen Temperaturen aushärten und haben einen hohen Festkörpergehalt.

Aus der JP—OS 21 92 67/83 ist ein Verfahren zur Herstellung eines Überzugs bekannt, bei dem ein Acrylatcopolymerisat, welches durch Copolymerisation von Acrylmonomeren mit einer tertiären Aminogruppe, Acryl- oder Methacrylsäureestern und gegebenenfalls weiteren Monomeren entsteht, eine Polyepoxidkomponente und eine durch Doppelbindungen und/oder Hydroxylgruppen aktivierte Carbonsäure vermischt werden und die Mischung auf das Substrat aufgetragen wird. Die Mischungen härten bei Raumtemperatur oder etwas erhöhter Temperatur aus, und der entstehende Film hat gute physikalische Eigenschaften, eine gute Benzinfestigkeit und gute Wetterbeständigkeit. Ein Vorteil des in der JP—OS 21 92 67/83 beschriebenen Verfahrens besteht darin, daß keine Braunfärbung der Acrylatlösung durch die tertiären Aminogruppen nach längerer Lagerung auftritt, was durch Zusatz der aktivierten Carbonsäure erreicht wird.

Aus der EP—B—13 439 ist die Herstellung einer tertiären Aminogruppe in einem Acrylatcopolymerisat bekannt. Die tertiäre Aminogruppe wird erhalten durch Reaktion von in das Acrylatcopolymerisat eingebauten Glycidylgruppen mit Aminen, die eine sekundäre Aminogruppe und mindestens eine sekundäre Hydroxylgruppe besitzen.

Die Aufgabe der vorliegenden Erfindung bestand darin, die Eigenschaften der Überzugsmittel bzw. der Überzüge auf der Basis einer Epoxy- Carboxy-Vernetzung zu verbessern in Hinsicht der Beständigkeit gegenüber langfristiger Belastung durch Chemikalien, Lösungsmitteln, in Hinsicht auf die Benzinfestigkeit, die Elastizität der auf Basis der Überzugsmittel erhaltenen Überzüge, des Glanzes, der Korrosionsbeständigkeit und hinsichtlich der Beständigkeit gegenüber Wasser bzw. Wasserdampf. Außerdem wird an die Zusammensetzungen der Anspruch gestellt, daß sie gegenbenenfalls bei Raumtemperatur oder bei leicht erhöhter Temperatur aushärten und damit beispielsweise in der Autoreparaturlackierung einsetzbar sind. Weiterhin soll aus wirtschaftlichen Gründen ein hoher Festkörpergehalt der härtbaren Überzugsmittel bei relativ geringer Viskosität erreichbar sein.

Diese Aufgabe wird überraschenderweise durch ein lösliches Acrylatcopolymerisat gelöst, welches einen höheren Anteil an einpolymerisierten mehrfach ethylenischen ungesättigten Monomeren aufweist als die in der EP—A—103 199 beschriebenen Acrylatharze. Im Vergleich zu linearen Acrylatharzen und den Acrylatharzen aus der EP—A—103 199 kann bei den erdindungsgemäßen Acrylatcopolymerisaten eine niedrigere Viskosität bei relativ hohem Festkörpergehalt erzielt werden. Erst durch die erfindungsgemäßen Reaktionsbedingungen während der Copolymerisation lassen sich Anteile von mehr als 3 Gewichts-% an mehrfach ungesättigten Monomeren in das Acrylatharz einbauen. Durch die stark verzweigte Struktur des Copolymerisats werden die funktionellen Gruppen des Acrylatharzes reaktiver, was einen großen Vorteil mit sich bringt.

Die der Erfindung zugrundeliegende Aufgabe wird durch das eingangs genannte lösliche, vorvernehte Acrylatcopolymerisat gelöst, das dadurch gekennzeichnet ist, daß zu einer Herstellung

a1) 5 bis 30 Gewichts-%, bevorzugt 5 bis 25 Gewichts-%, eines Monomeren mit mindestens zwei polymerisierbaren, olefinisch ungesättigten Doppelbindungen

a2) 3 bis 30 Gewichts-%, bevorzugt 5 bis 20 Gewichts-%, eines carboxylgruppenhaltigen Monomeren und

a3) mindestens 40 Gewichts-% weiterer Monomeren mit einer polymerisierbaren, olefinisch ungesättigten Doppelbindung, wobei die Summe von a1, a2, und a3 100 Gewichts-% beträgt, in einem organischen Lösungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die Polymerisation so durchgeführt wird, daß eine Lösung des Polymerisats mit einem Festkörpergehalt von 40 bis 65 Gewichts-% resultiert und die Säurezahl des Acrylatcopolymerisats 15 bis 200, bevorzugt 30 bis 120, beträgt.

Als Komponente al können vorteilhaft Verbindungen der allgemeinen Formel

$$CH_2=\overset{R}{\overset{|}{C}}-\overset{O}{\overset{\|}{C}}-X-(CH_2)_n-X-\overset{O}{\overset{\|}{C}}-\overset{R}{\overset{|}{C}}=CH_2$$

verwendet werden, in der bedeuten:
R=H oder $CH_3$
X=O, NR', S mit R'=H, Alkyl, Aryl
n=2 bis 8.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Hexamethylenbismethacrylat, Trimethylolpropantriacrylat, Trimethylolpropantrimethylacrylat und ähnliche Verbindungen.

Selbstverständlich können auch Kombinationen der mehrfach ungesättigen Monomeren eingesetzt werden.

Weitere mögliche Komponenten a1 sind Umsetzungsprodukte aus einer Carbonsäure mit einer polymerisierbaren, olefinisch ungesättigen Doppelbindung und Glycidylacrylat und/oder Glycidylmethacrylat. Es kann auch eine mit einem ungesättigten, eine polymerisierbare Doppelbindung enthaltenden Alkohol veresterte Polycarbonsäure oder ungesättigte Monocarbonsäure als Komponente a1 eingesetzt werden. Weiterhin können auch Diolefine, wie Divinylbenzol, eingesetzt werden. Als Monomere mit mindestens zwei polymerisierbaren, olefinisch ungesättigten Doppelbindungen werden auch Umsetzungsprodukte eines Polyisocyanats mit ungesättigte, polymerisierbare Doppelbindungen enthaltenden Alkoholen oder Aminen eingesetzt. Als Beispiel hierfür sie das Umsetzungsprodukt aus einem Mol Hexamethylendiisocyanat mit 2 Molen Allylalkohol genannt. Die mehrfach ethylenisch ungesättigten Monomeren können vorteilhafterweise Diester von Polyethylenglykol und/oder Polypropylenglykol mit einem mittleren Molekulargewicht von weniger als 1500, bevorzugt weniger als 1000, und Acrylsäure und/oder Methacrylsäure sein.

Als Komponente a2) eignet sich besonders β-Carboxyethylacrylat, es kommen weiterhin Acrylsäure, Methacrylsäure, Itaconsäure, Crotonsäure, Actonitsäure, Malein- und Fumarsäure oder deren Halbester in Frage.

Die Auswahl der Komponente a3) richtet sich weitgehend nach den gewünschten Eigenschaften des Acrylatcopolymerisats in bezug auf Elastizität, Härte, Verträglichkeit und Polarität. Diese Eigenschaften

lassen sich zum Teil mit Hilfe der bekannten Glasübergangstemperaturen der Monomeren steuern. Die Monomeren können ausgewählt sein aus der Gruppe Styrol, Vinyltoluol, Alkylester der Acrylsäure und der Methacrylsäure, Alkoxyethylacrylate und Aryloxyethylacrylate und der entsprechenden Methacrylate sowie Ester der Malein- und Fumarsäure.

Genannt seien Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethylacrylat, Octylmethacrylat, 3,5,5-Trimethylhexylacrylat, Decylmethacrylat, Dodecylmethacrylat, Hexadecylmethacrylat, Octadecylmethacrylat, Butoxyethylacrylat, Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen.

Außerdem können als Komponente a3) auch hydroxylgruppenhaltige Monomere eingesetzt werden, beispielsweise Hydroxyalkylester der Acryl- und/oder Methacrylsäure. Es ist möglich, als weitere Monomere mit einer polymerisierbaren olefinisch ungesättigten Doppelbindung 0,1 bis 5 Gewichts-%, bezogen auf das Gesamtgewicht aller Monomeren, Monomere mit Phosphorsäuregruppen, also z.B. Phosphorsäureester mit polymerisierbaren Doppelbindungen, einzusetzen.

Besonders vorteilhafte ist es, wenn in das eine Säurezahl von 15 bis 200, vorzugsweise 30 bis 120, aufweisende Acrylatcopolymerisat Monomere eingebaut werden, die Gruppen enthalten, die eine nachfolgende Vernetzung des Carboxylgruppen enthaltenden Acrylatcopolymerisats mit Epoxidgruppen katalysieren, also beispielsweise tertiäre Aminogruppen.

Gegenstand der Erfindung ist auch ein lösliches, vorvernetztes Acrylatcopolymerisat, das dadurch gekennzseichnet ist, daß zu seiner Herstellung

a1) mehr als 3 bis 30 Gewichts-%, bevorzugt 5 bis 25 Gewichts-%, eines Monomeren mit mindestens zwei polymerisierbaren, olefinisch ungesättigten Doppelbindungen, wobei Di- und Polyester von Di- und Polyolen mit Acrylsäure ausgenommen sind,

a2) 3 bis 30 Gewichts-%, bevorzugt 5 bis 20 Gewichts-%, eines carboxylgruppenhaltigen Monomeren

a4) 0,1 bis 20 Gewichts-%, bevorzugt 1 bis 14 Gewichts-%, eines tertiären Amins mit einer polymerisierbaren, olefinisch ungesättigten Doppelbindung

a5) 0 bis 40 Gewichts-%, bevorzugt 5 bis 25 Gewichts-%, eines hydroxylgruppenhaltigen Monomeren und

a3) 0 bis 80 Gewichts-% weiterer Monomerer mit einer polymerisierbaren, olefinisch ungesättigten Doppelbindung,

wobei die Summe Komponenten a1), a2), a4), a5) und a3) 100 Gewichts-% beträgt, in einem organischen Lösungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die Polymerisation so durchgeführt wird, daß eine Lösung des Polymerisats mit einem Festkörpergehalt von 40 bis 65 Gewichts-% resultiert und die Säurezahl des Acrylatcopolymerisats 15 bis 200, bevorzugt 30 bis 120, beträgt.

Als Komponente al können vorteilhaft Verbindungen der allgemeinen Formel

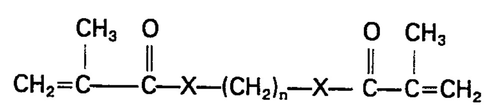

in der bedeuten:

X=O, NR, S mit R=H, Alkyl Aryl

n=2 bis 8

verwendet werden.

Die Komponente al kann ein Umsetzungsprodukt aus einer Carbonsäure mit einer polymerisierbaren, olefinisch ungesättigten Doppelbindung, wobei Acrylsäure ausgeschlossen ist, und Glycidylmethyacrylat sein. Weiterhin kommen mit einem ungesättigten, eine polymerisierbare Doppelbindung enthaltenden Alkohol veresterte Polycarbonsäuren oder ungesättigte Monocarbonsäuren mit Ausnahme von Derivaten der Acrylsäure in Frage. Günstig ist auch die Verwendung von Polyolefinen, wie z.B. Divinylbenzol. Vorteilhafterweise werden die Komponenten al ausgewählt aus Produkten, die hergestellt werden aus Polyisocyanaten mit ungesättigte, polymerisierbare Doppelbindungen enthaltenden Alkoholen oder Aminen. Weiterhin kommen Diester von Polyethylenglykol und/oder Polypropylenglykol mit einem mittleren Molekulargewicht von weniger als 1500, bevorzugt von weniger als 1000, und Methacrylsäure in Frage.

Als Komponente a2) eignet sich insbesondere β-Carboxyethylacrylat.

Beispiele für ethylenisch ungesättigte Verbindungen mit einer tertiären Aminogruppe, also für die Komponente a4), sind N,N'-Dimethylaminoethylmethacrylat, N,N'-Diethylaminoethylmethacrylat, 2-Vinylpyridin und 4-Vinylpyridin, Vinylpyrrolin, Vinylcholin, Vinylisochinolin, N,N'-Dimethylaminoethylvinylether und 2-Methyl-5-vinylpyridin.

Gegebenenfalls können hydroxylgruppenhaltige Monomere eingesetzt werden. Als Beispiele seien Hydroxyalkylester der Acryl- und Methacrylsäure genannt, wie z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Die Auswahl der weiteren Monomeren mit einer polymerisierbaren, olefinisch ungesättigten Doppelbindung erfolgt aus der bereits obengenannten Gruppe.

Es ist auch in diesem Fall gegebenenfalls vorteilhaft, daß als weitere Monomere mit einer polymerisierbaren Doppelbindung, 0,1 bis 5 Gewichts-%, bezogen auf das Gesamtgewicht aller Monomeren, Monomere mit Phosphorsäuregruppen eingesetzt sind.

Erfindungsgemäß werden zur Herstellung des eine Säurezahl von 15 bis 200, vorzugsweise 30 bis 120, aufweisenden löslichen, vorvernetzten Acrylatcopolymerisats

a1) mehr als 3 bis 30 Gewichts-%, bevorzugt 5 bis 25 Gewichts-%, eines Monomeren mit mindestens zwei polymerisierbaren, olefinisch ungesättigten Doppelbindungen, wobei Di- und Polyester von Di- und Polyolen mit Acrylsäure ausgenommen sind.

a4) 0,1 bis 20 Gewichts-%, bevorzugt 1 bis 14 Gewichts-%, eines tertiären Amins mit einer polymerisierbaren, olefinisch ungesättigten Doppelbindung,

a5) 5 bis 40 Gewichts-%, bevorzugt 10 bis 30 Gewichts-%, hydroxylgruppenhaltigen Monomere und

a3) 0 bis 80 Gewichts-% weitere polymerisierbare Monomere mit einer olefinisch ungesättigten Doppelbindung

wobei die Summe von a1), a3), a4) und a5) 100 Gewichts-% beträgt, in einem organischen Lösungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert. Die Polymerisation wird so durchgeführt, daß eine Festkörpergehalt der Lösung des Polymerisats von 40 bis 65 Gewichts-% resultiert, und nach Beendigung der Copolymerisation erfolgt die Umsetzung mit

a6) cyclischen Carbonsäureanhydren.

Als Komponente a1 können vorteilhaft Verbindungen der allgemeinen Formel

$$CH_2{=}\overset{\displaystyle CH_3}{\overset{|}{C}}{-}\overset{\displaystyle O}{\overset{\|}{C}}{-}X{-}(CH_2)_n{-}X{-}\overset{\displaystyle O}{\overset{\|}{C}}{-}\overset{\displaystyle CH_3}{\overset{|}{C}}{=}CH_2,$$

in der bedeuten:

X=O, NR', S mit R=H, Alkyl, Aryl

n=2 bis 8.

verwendet werden.

Beispiele für mehrfach ethylenisch ungesättigte Verbindungen sind Hexandioldimethyacrylat, Glykoldimethacrylat, Butandioldimethacrylat, Trimethylolpropantrimethacrylat, Divinylbenzol und ähnliche Verbindungen. Es können vorteilhafterweise auch die bereits schon genannten ethylenisch ungesättigten Verbindungen eingesetzt werden, vorausgesetzt, daß es sich nicht um Di- und Polyester von Di- und Polyolen mit Acrylsäure handelt.

Als polymerisierbare tertiäre Amine kommen die bereits obengenannten in Frage.

Als Komponente a5) eignen sich Hydroxyalkylester der Acryl- und/oder Methacrylsäure mit einer primären Hydroxylgruppe, z.B. Hydroxyethylacrylat, Hydroxypropylacrylat, Hydroxyamylacrylat, Hydroxyhexylacrylat, Hydroxyoctylacrylat und die entsprechenden Methacrylate sowie Hydroxyalkylester mit einer sekundären OH-Gruppe, wie 2-Hydroxypropylacrylat, 2-Hydroxybutylacrylat, 3-Hydroxybutylacrylat und die entsprechenden Methacrylate.

Außerdem kommen als Komponente a5) Umsetzungsprodukte aus Acrylsäure und/oder Methacrylsäure mit dem Glycidylester einer Carbonsäure mit einem tertiären α-Kohlenstoffatom in Frage.

Die Auswahl der Komponente a3) ist nicht besonders kritisch und richtet sich nach den gewünschten Eigenschaften des Acrylatcopolymerisats. Es sei erwähnt, daß als Komponente a3) auch carboxylgruppenhaltige Monomere einsetzbar sind.

Beispiele für die Komponente a6) sind Phthalsäureanhydrid, Tetrahydrophthalsäureanhydrid, Hexahydrophthalsäureanhydrid, Bernsteinsäureanhydrid sowie deren halogenierte Derivate. Als Komponente a6) kann auch Maleinsäureanhydrid verwendet werden, jedoch ist darauf zu achten, daß keine Lösungsmittel eingesetzt werden, die unter Katalyse der tertiären Stickstoffgruppen mit Maleinsäureanhydrid reagieren. Nicht verwendbar sind beispielsweise Aceton, Methylethylketon, Butylacetat sowie andere acetylierende Lösungsmittel. Verwendet werden können Kohlenwasserstoffe und polare Lösungsmittel, wie Dimethylformamid, Dimethylacetamid, N-Methylpyrrolidon etc.

Gegenstand der vorliegenden Erfindung ist auch ein lösliches vorvernehtes Acrylatcopolymerisat mit einer Säurezahl von 15 bis 200, das dadurch gekennzeichnet ist, daß zu seiner Herstellung

a1) mehr als 3 bis 30 Gewichts-%, bevorzugt 5 bis 25 Gewichts-%, Monomere mit mindestens zwei polymerisierbaren, olefinisch ungesättigten Doppelbindungen,

a7) 1 bis 25 Gewichts-%, bevorzugt 3 bis 15 Gewichts-%, Monomere mit cyclischen Carbonsäurenanhydridgruppen

a3) 45 bis 80 Gewichts-% weitere polymerisierbare Monomere mit einer olefinisch ungesättigten Doppelbindung, wobei die Summe von a1, a3 und a7 100 Gewichts-% beträgt, in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren copolymerisiert werden, die Polymerisation zur Herstellung des Copolymerisats so durchgeführt wird, daß eine Lösung des Polymerisats mit einem Festkörpergehalt von 40 bis 65 Gew.-% resultiert, nach Beeindigung der Copolymerisationsreaktion die Umsetzung des Copolymerisats mit

a8) Verbindungen, die sowohl mindestens einem mit Säurenanhydridgruppen reaktionsfähigen Wasserstoff als auch mindestens eine tertiäre Aminogruppe enthalten, sowie gegebenenfalls mit monofunktionellen Verbindungen mit aktivem Wasserstoff

erfolgt und die Säurezahl des Acrylatcopolymerisats 15 bis 200, bevorzugt 30 bis 120, beträgt.

Als Komponente al eignen sich die bereits genannten mehrfach ethylenisch ungesättigten Monomeren einschließlich der Di- und Polyester von Di- und Polyolen mit Acrylsäure.

Beispiele für Monomere mit cyclischen Carbonsäureanhydridgruppen sind Maleinsäureanhydrid oder Itaconsäureanhydrid.

Die Auswahl der Komponente a3 richtet sich nach den gewünschten Eigenschaften des Acrylatcopolymerisats. Es sei erwähnt, daß sich in dem vorliegenden Fall auch Monomere mit Carboxylgruppen, also beispielsweise Acrylsäure oder Methacrylsäure, eignen.

Vorteilhafterweise werden als Komponente a8) Alkohole, welche tertiäre Aminogruppe enthalten, sowie primäre oder sekundäre Amine mit einer tertiären Aminogruppe eingesetzt. Der reaktionsfähige Wasserstoff der Komponent a8) kann aus einer Hydroxylgruppe, einer primären oder sekundären Aminogruppe oder einer Thiolgruppe stammen.

Beispiele für Alkohole mit tertiären Aminogruppen sind Addukte von sekundären Aminen und Epoxyverbindungen. Beispiele für sekundäre Amine sind Dimethylamin, Diethylamin, Dipropylamin, Dibutylamin, Morpholin und Pyrrolidin.

Beispiele für geeignete Epoxyverbindungen sind Ethylenoxid, Propylenoxid, Butylenoxid, Styroloxid und Cyclohexanoxid.

Geeignete Alkhohole mit tertiären Amingruppen, die durch Reaktion von sekundären Aminen mit Epoxyverbindungen erhalten werden, sind Dimethylaminoethanol, Diethylaminoethanol, Di-n-propylaminoethanol, Diisopropylaminoethanol, Di-n-butylaminoethanol, N-(2-hydroxyethyl)morpholin, N-(2-hydroxyethyl) piperidin, N-(2-hydroxyethyl) pyrrolidon, N-(2-hydroxyethyl)Azeridin, N,N'-Dimethyl-2-hydroxypropylamin, N,N'-Diethyl-2-hydroxypropylamin, Triethanolamin und Tripropanolamin.

Weitere Beispiele für tertiäre Aminogruppen enthaltende Alkohole sind Vinylpolymere, die sowohl eine tertiäre Aminogruppe als auch eine Hydroxylgruppe in der Seitenkette haben und erhältlich sind durch Copolymerisation der genannten tertiären Aminogruppen enthaltenden (Meth)acrylatmonomeren mit OH-Gruppen enthaltenden Monomeren, wie beispielsweise β-Hydroxyethyl(meth)acrylat.

Beispiele für die primären oder sekundären Amine, welche eine tertiäre Aminogruppe enthalten, sind N,N'-dialkyl-1,3-propylendiamine, wie z.B. N,N'-dimethyl-1,3-propylendiamine, N,N'-diethyl-1,3-propylendiamin und N,N'-Dialkyl-1,4-tetramethylendiamine, wie. z.B. N,N'-Dimethyl-1,4-tetramethylendiamin und N,N'-Diethyl-1,4-tetramethylendiamin. Weiterhin kommen N,N'-Dialkyl-1,6-hexamethylendiamine und N-Alkylpiperazine sowie 2-Aminopyridin, 4-Aminopyridin und N-Alkylaminopyridin in Frage.

Es sei erwähnt, daß ein Teil der Carbonsäureanhydridgruppen auch mit einer monofunktionellen Verbindung mit aktivem Wasserstoff, wie z.B. Alkoholen, umgesetzt sein kann.

Gegenstand der vorliegenden Erfindung ist weiterhin ein lösliches, vorvernetztes Acrylatcopolymerisat, welches eine Säurezahl von 15 bis 200, vorzugsweise 30 bis 120, aufweist und zu dessen Herstellung

a1) mehr als 3 bis 30 Gewichts-%, besonders bevorzugt 5 bis 25 Gewichts-%, Monomere mit mindestens zwei polymerisierbaren, olefinisch ungesättigten Doppelbindungen,

a9) 1 bis 25 Gewichts-% Glycidylester von ethylenisch ungesättigten Carbonsäuren und/oder Glycidylether von olefinisch ungesättigten Verbindungen

a3) 40 bis 95 Gewichts-% weitere polymerisierbare Monomere mit einer olefinisch ungesättigten Doppelbindung,

wobei die Summe von aller Monomerer 100 Gewichts-% beträgt, in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren copolymerisiert werden, die Polymerisation zur Herstellung des Copolymerisats so durchgeführt wird, daß eine Lösung des Polymerisats mit einem Festkörpergehalt von 40 bis 65 Gew.-% resultiert, nach Beeindigung der Copolymerisationsreaktion die Umsetzung mit

a10) Aminen mit einer sekundären Aminogruppen oder Di- oder Polyaminen mit mindestens einer tertiären Aminogruppe und einer primären oder sekundären Aminogruppen und/oder

a11) Carbonsäuren, die ein tertiäres Stickstoffatom enthalten, und

a6) mit cyclischen Carbonsäureanhydriden erfolgt.

Als Komponente al kommen die bereits genannten mehrfach ethylenisch ungesättigten Monomeren in Frage.

Beispiele für die Komponente a9) sind Glycidylester der Acrylsäure oder der Methacrylsäure sowie Allyl- und Vinylglycidylether, Glycidylvinylester oder Glycidylallyester, wie Glycidylvinylphthalat, Glycidylallylphthalat.

Die Auswahl der Komponente a3) richtet sich nach den gewünschten Eigenschaften des Acrylatcopolymerisats und kann aus der bereits oben genannten Gruppe erfolgen. Es sollen aber keine carboxylgruppenhaltigen und Aminogruppen enthaltenden Monomere als Komponente a3 verwendet werden, da diese mit der Oxirangruppe der Komponente a2 reagieren. Der Anteil an hydroxylgruppenhaltigen Monomeren sollte möglichst niedrig sein. Sind zur Erzielung einer bestimmten Polarität des Copolymerisats Hydroxylgruppen nötig, so sollten Monomere mit sekundären OH-Gruppen bevorzugt werden.

Beispiele für die Komponente a10) sind Imidazol, Aminopyridin, N-Alkylaminopyridin, Ethylpiperazin, Dibutylamin.

Beispiele für die Komponente a11) sind 3- und 4-Dimethylaminobenzoesäure, Picolinsäure und Dimethylaminosalicylsäure.

Als Beispiele für die Komponente a6) seien Phthalsäureanhydrid, Tetrahydrophthalsäureanhydrid, Hexahydrophthalsäureanhydrid, Bernsteinsäureanhydrid sowie deren halogenierte Derivate genannt.

Die Erfindung betrifft auch Verfahren zur Herstellung der löslichen, vorvernetzten Acrylatcopolymerisate nach Anspruch 1, 2, 3 oder 4, die dadurch gekennzeichnet sind, daß zu ihrer Herstellung die Monomeren in einem organischen Lösungsmittel bei 70°C bis 130°C, vorzugsweise bei 80°C bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden, wobei die Polymerisation zur Herstellung der Acrylatcopolymerisate so durchgeführt wird, daß eine Lösung des Polymerisats mit einem Festkörpergehalt von 40 bis 65 Gewichts-% resultiert.

Gegenstand der Erfindung ist auch ein Verfahren zur Herstellung des löslichen, vorvernetzten Acrylatcopolymerisats nach Anspruch 5, das dadurch gekennzeichnet ist, daß zu seiner Herstellung zunächst die Monomeren in einem organischen Lösungsmittel bei 70°C bis 130°C, vorzugsweise bei 80°C bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden, wobei die Polymerisation zur Herstellung der Acrylatcopolymerisate so durchgeführt wird, daß eine Lösung des Polymerisats mit einem Festkörpergehalt von 40 bis 65 Gew.-% resultiert,
und nach Beeindigung der Copolymerisation die Umsetzung mit den cyclischen Säurenhydriden erfolgt.

Die Erfindung betrifft ferner ein Verfahren zur Herstellung der löslichen, vorvernetzten Acrylatcopolymerisate nach Anspruch 6, 7 oder 8, das dadurch gekennzeichnet ist, daß zu ihrer Herstellung zunächst die Monomeren in einem organischen Lösungsmittel bei 70°C bis 130°C, vorzugsweise bei 80°C bis 120°C, unter Verwendung von mindestens 0,5 Gewichts-%, vorzugsweise mindestens 2,5 Gewichts-% bezogen auf das Gesamtgewicht der Monomeren, eines Polymerisationsreglers und unter Verwendung von Polymerisationsinitiatoren zu vorvernetzten, nicht gelierten Produkten copolymerisiert werden, wobei die Polymerisation zur Herstellung der Acrylatcopolymerisate so durchgeführt wird, daß eine Lösung des Polymerisats mit einem Festkörpergehalt von 40 bis 65 Gew.-% resultiert, als Regler Mercaptane mit primären SH-Gruppen ausgenommen sind und nach Beeindigung der Copolymerisationsreaktion die Umsetzung des Copolymerisats mit den Verbindungen, die sowohl mindestens einen mit Säureanhydridgruppen reaktionsfähigen Wasserstoff als auch mindestens eine tertiäre Aminogruppe enthalten sowie gegebenenfalls mit monofunktionellen Verbindungen mit aktivem Wasserstoff erfolgt.

Gegenstand der vorliegenden Erfindung ist weiterhin ein Verfahren zur Herstellung des löslichen Acrylatcopolymerisats nach Anspruch 9, das dadurch gekennzeichnet ist, daß zu seiner Herstellung zunächst die Monomeren in einem organischen Lösungsmittel bei 70°C bis 130°C, vorzugsweise bei 80°C bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers, wobei Thiocarbonsäuren ausgenommen sind, und unter Verwendung von Polymerisationsinitiatoren zu einem vorvernetzten, nicht gelierten Produkt copolymerisiert werden, wobei die Polymerisation zur Herstellung der Acrylatcopolymerisate so durchgeführt wird, daß eine Lösung des Polymerisats mit einem Festkörpergehalt von 40 bis 65 Gew.-% resultiert, und nach Beeindigung der Copolymerisationsreaktion die Umsetzung mit den Di- oder Polyaminen mit mindestens einer tertiären Aminogruppe und mindestens einer primären oder sekundärn Aminogruppe and/or mit Carbonsäuren, die einen tertiären Stickstoff enthalten, sowie mit den cyclischen Carbonsäureanhydriden erfolgt.

Es ist darauf zu achten, daß ein vorvernetztes, aber nicht geliertes Copolymerisat wird. Durch geeignete Polymerisationsbedingungen läßt sich überraschenderweise eine klare, transparente, nicht gelierte Lösung eines verzweigten Copolymerisats herstellen. Durch die Verwendung von Monomeren mit mindestens zwei ethylenisch ungesättigten Gruppen wird eine Vorvernetzung der Copolymerisationsmoleküle hervorgerufen, die aufgrund der erfindungsgemäßen speziellen Reaktionsbedingungen trotzdem nicht gelierten Produkten führt.

Die Polymerisation wird so durchgeführt, daß eine Lösung des Polymerisats mit einem Festkörpergehalt von 40 bis 65 Gewichts.-% resultiert. Der Festkörpergehalt ist abhängig von dem Anteil an einpolymerisierten, mehrfach ethylenisch ungesättigten Monomeren. Ist dieser Anteil niedrig, so kann bei höheren Festkörpergehalten innerhalb des vorgegebenen Rhamens der Anspruc̈che polymerisiert werden.

Weiterhin ist es notwendig, geeignete Initiatoren und je nach dem Anteil an mehrfach funktionnellem Monomer, mindestens 0,5 Gewichts-%, vorzugsweise jedoch mindestens 2,5 Gewichts-%, eines Polymerisationsreglers einzusetzen. Die Auswahl des Initiators richtet sich nach dem Anteil der eingesetzten mehrfach funktionellen Monomeren. Bei niedrigem Anteil kann man die für solche Temperaturen üblichen Initiatoren, wie. z.B. Peroxiester, verwenden. Bei höherem Anteil an mehrfach funtionellem Monomer werden vorzugsweise Initiatoren, wie. z.B. Azoverbindungen, eingesetzt. Nach der Polymerisation wird die Polymerisatlösung durch Abdestillieren von Lösungsmittel auf den gewünschten Festkörpergehalt konzentriert, vorzugsweise auf Festkörpergehalte von 60 Gewichts-%. Die so erhaltenen klaren Copolymerisatlösungen besitzen, auf einen Festkörpergehalte von 50 Gewichts-% eingestellt, eine Viskosität von 0,4 bis 10 dPa.s.

Die Polymerisation wird in Gegenwart eines organischen Lösungsmittels durchgeführt. Beispiele sind Ethanol, Isopropanol, n-Propanol, n-Butanol, Isobutanol, t-Butanol, Methyl-, Ethyl-, Propyl- und Butylester der Essigsäure, Aceton, Methylethylketon, Xylol, Toluol.

Die Polymerisation kann auch in Gegenwart eines chlorierten Polyolefins durchgeführt werden. Es resultieren Acrylatharzlösungen, die nach erfindungsgemäßer Vernetzung eine gute Haftung auch auf nicht metallischen Untergründen, wie etwa Kunststoffen, gewährleisten.

Als Polymerisationsregler eignen sich vorzugsweise mercaptogruppenenthaltende Verbindungen, wobei besonders bevorzugt Mercaptoethanol eingesetzt wird. Andere mögliche Regler sind beispielsweise t-Dodecylmercaptan, Phenylmercaptan, Octyldecylmercaptan, Butylmercaptan und Thiocarbonsäuren, wie etwa Thiomilchsäure.

Es ist zu beachten, daß bei der Herstellung des Acrylatcopolymerisats nach Anspruch 6, 7 oder 8 als Polymerisationsregler keine Hydroxymercaptane bzw. Mercaptane mit primären SH-Gruppen eingesetzt werden. Bei der Auswahl des Polmerisationsreglers bei der Herstellung des Acrylats nach Anspruch 9 ist darauf zu achten, daß keine Thiocarbonsäuren verwendet werden.

Die Erfindung betrifft auch ein Überzugsmittel, enthaltend als wesentliche Bindemittel

A) ein Acrylatcopolymerisat, hergestellt nach den Verfahren nach einem der Ansprüche 23 bis 29 und

B) eine mindestens zwei Epoxidgruppen pro Molekül enthaltende Verbindung,

wobei das Verhältnis von A zu B so gewählt wird, daß das Verhältnis der Säuregruppen von A zu den Epoxidgruppen von B im Bereich von 0,5:3 bis 2:0,5 liegt und gegebenenfalls ein Vernetzungskatalysator verwendet wird.

Beispiele für Verbindungen mit mindestens zwei Epoxidgruppen pro Molekül sind Kondensationsprodükte aus Epichlorhydrin und Bisphenol A, cycloaliphatische Bisepoxide, die den Formeln (I) und (II) entsprechen:

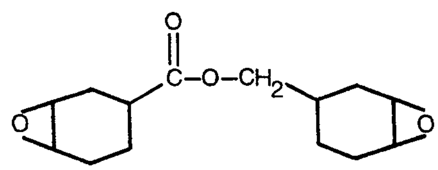

(I)

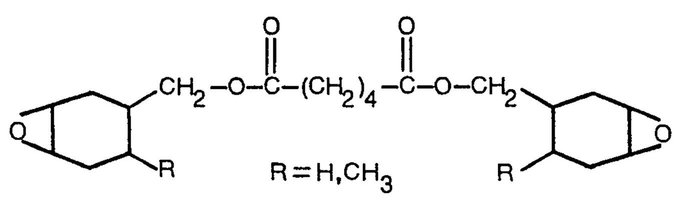

(II)

sowie epoxidierte Polybutadiene, die durch Reaktion von handelsüblichen Polybutadienölen mit Persäuren bzw. organischen Säure-$H_2O_2$-Mischungen entstehen, epoxidgruppenhaltige Novolake, Glycidylether eines mehrwertigen Alkohols, z.B. Ethvlenglykoldiglycidylether, Glycerinpolyglycidylether, Sorbitolpolyglycidylether, Trimethylolpropanpolyglycidylether und Pentaerythritpolyglycidylether und niedermolekulare Acrylatharze mit seitenständigen Oxirangruppen.

Gegebenenfalls kann ein Vernetzungskatalysator verwendet werden. Hierbei eignen sich besonders tertiäre Amine, quartäre Ammoniumverbindungen, wie z.B. Benzyltrimethylammoniumhydroxid und Benzyltrimethylammoniumchlorid, spezielle Chromverbindungen sowie Zinnverbindungen, Selbstverständlich erübrigt sich der Einsatz eines Vernetzungskatalysators in den meisten Fällen, bei denen bereits tertiäre Aminogruppen in das Acrylatcopolymerisat eingebaut sind. Durch den Einsatz eines internen oder externen Vernetzungskatalysators werden tiefere Einbrenntemperaturen und kürzere Einbrennzeiten erreicht. Vorzugsweise wird der Vernetzungskatalysator in einer Menge von 0,5 bis 10 Gewichts-%, bezogen auf das Gewicht der Di- bzw. Polyepoxidkomponente, verwendet.

Die Erfindung betrifft auch ein Verfahren zur Herstellung der zuvor beschriebenen überzugsmittel, das dadurch gekennzeichnet ist, daß zu ihrer Herstellung die zuvor beschriebenen löslichen, vorvernetzten Acrylatcopolymerisate hergestellt werden und diese mit B), einer Verbindung, die mindestens zwei Epoxidgruppen pro Molekül enthält, gegebenenfalls unter Mitverwendung eines Vernetzungskatalysators sowie mit organischen Lösungsmitteln, gegebenenfalls Pigmenten und üblichen Hilfsstoffen und Additiven durch Mischen und gegebenenfalls Dispergieren zu einer Überzugsmasse verarbeitet werden, wobei das Verhältnis von A zu B so gewählt wird, daß das Verhältnis der Säuregruppen von A zu den Epoxidgruppen von B im Bereich von 0,5:3 bis 2:0,5 liegt.

Die erfindungsgemäßen Überzugsmittel können bei niedrigen Temperaturen, z.B. bei Temperaturen von 20 bis 80°C, gehärtet werden und werden daher insbesondere be der Reparaturlackierung von Kraftfahrzeugen eingesetzt. Selbstverständlich können die Überzugsmittel auch bei höheren Temperaturen als 80°C eingebrannt werden.

Die Erfindung betrifft auch ein Verfahren zur Herstellung eines Überzugs, bei dem die zuvor beschriebenen Überzugsmittel durch Spritzen, Fluten, Tauchen, Walzen, Rakeln oder Streichen auf ein Substrat in Form eines Films aufgebracht wird und der Film zu einem festhaftenden Überzug gehärtet wird. Die Erfindung betrifft auch nach dem erfindungsgemäßen Verfahren beschichtete Substrate.

Die erfindungsemäßen Überzüge haben hervorragende Eigenschaften in bezug auf Beständigkeit gegenüber langfristiger Belastung durch Chemikalien, Lösungsmittel, in Hinsicht auf die Benzinfestigkeit, die Elastizität, den Glanz, die Korrosionsbeständigkeit und die Beständigkeit gegenüber Wasser bzw. Wasserdampf. Die Überzugsmittel härten gegebenenfalls bei niedrigen Temperaturen aus und sind damit beispielsweise in der Autoreparaturlackierung einsetzbar. Weiterhin kann ein hoher Festkörpergehalt der härtbaren Überzugsmittel bei relativ niedriger Viskosität, verglichen mit linearen Acrylatcopolymerisaten und mit Acrylatharzen mit einem niedrigeren Anteil an einpolymerisierten mehrfach ethylenisch ungesättigten Monomeren erzielt werden.

Im folgenden wird die Erfindung anhand von Ausführungsbeispielen näher erläutert:

A) Herstellung erfindungsgemäßer Copolymerisate (Bindemittel A)

In den folgenden Beispielen beziehen sich, wenn nicht anders angegeben, alle Prozentangaben auf Gewichtsprozent, alle Angaben von Teilen auf Gewichtsteile. Die Festkörperwerte wurden in einem Umluftofen bestimmt nach 1 Stunde bei 130°C. Die Viskositäten wurden auf einem Kegel-Platte-Viskosimeter bestimmt.

Acrylatharz I

In einem 3 1-Edelstahlkessel werden vorgelegt

212 Teile Solvenon PM (1-Methoxypropanol-2)
212 Teile Butylacetat 98/100
0,16 Teile unterphosphorige Säure (50% in $H_2O$)

Das Gemisch wird auf 10°C erhitzt, innerhalb 3h werden gleichmaßig aus 2 Zulaufgefäßen zudosiert:

Zulauf 1
160 Teile Styrol
160 Teile Hexandioldimethacrylat
80 Teile β-Carboxyethylacrylat
120 Teile n-Butylacrylat
200 Teile t-Butylacrylat
52 Teile Thiomilchsäure

Zulauf 2
80 Teile 4-Vinylpyridin

Innerhalb 4 h wird aus Zulaufgefäß 3 gleichmäßig zudosiert

Zulauf 3:
32 Teile Azobisisobutyronitril
230 Teile Solvenon PM (1-Methoxypropanol-2)
230 Teile Butylacetat 98/100

Alle 3 Zuläufe werden gleichzeitig gestartet. Nach Initiatorzulaufende wird weitere 2 h nachpolymerisiert.

Die Acrylatharzlösung I hat einen Festkörper (2 h 100°C) von 50,7%, Viskosität (23°C, original) von 6,1 dPa.s und eine Säurezahl von 67 (mg KOH/g Festharz).

Acrylatharz II

Verfahren und Zulaufzeiten wie bei Acrylatharz I,

Vorlage: 197,0 Teile Butylacetat 98/100
197,0 Teile 1-Methoxypropylacetat-2

Zulauf 1 140 Teile Styrol
140 Teile Butandioldimethacrylat
105 Teile n-Butylacrylat
175 Teile t-Butylacrylat
70 Teile 4-Hydroxibutylacrylat
31,5 Teile Mercaptoethanol

Zulauf 2: 70 Teile 4-Vinylpyridin

Zulauf 3 25,2 Teile Azobisisobutyronitril
181,3 Teile Butylacetat 98/100
181,3 Teile 1-Methoxipropylacetat-2

Zulauf 1+12 3 h, Zulauf 3 4 h, danach 3 h Nachpolymerisation bei 110°C.

Zu der Acrylatharzlösung werden 90,8 Teile Bernsteinsäureanhydrid gegeben und unter Rühren 6 h bei 120°C gehalten. Die Lösung des Additionsprodukts von Bernsteinsäureanhydrid an das OH-Acrylat hat eine Säurezahl von 71, Viskosität 6 dPa.s und Festkörper 52,2%.

Acrylatharzlösung III

In einem 3 1-Edelstahlkessel werden vorgelegt:
195 Teile Butylacetat 98/100
195 Teile 1-Methoxipropylacetat-2

Das Gemisch wird auf 112°C aufgeheizt und Zulauf 1 und 2 werden innerhalb 3 h gleichmäßig zudosiert:

Zulauf 1: 140 Teile Styrol
140 Teile Hexandioldimethacrylat
70 Teile Butandioldimethacrylat
105 Teile n-Butylacrylat
175 Teile t-Butylacrylat
31,5 Teile Mercaptoethanol
Zulauf 2: 70 Teile 4-Vinylpyridin

Zulauf 3 wird in 4,25 h gleichmäßig zudosiert, Zulaufbeginn von 1, 2, 3 gleichzeitig.

Zulauf 3: 181,6 Teile Butylacetat 98/100
181,6 Teile 1-Methoxipropylacetat-2
25,2 Teile Azobisisobutyronitril

Nach Ende von Zulauf 3 wird weitere 2 h bei 112°C nachpolymerisiert, danach werden 81,4 Teile Bernsteinsäureanhydrid zugegeben und unter Rühren 6 h bei 120°C gehalten. Die erhaltene klare Acrylatharzlösung hat einen Festkörper von 52,5%, eine Säurezahl von 68 und eine Viskosität von 6,8 dPa.s.

Acrylatharzlözung IV

In einem 3 l Edelstahlkessel werden vorgelegt und auf 110°C aufgeheizt:

Vorlage: 235 Teile Solvenon PM
235 Teile Butylacetat 98/100
0,16 Teile unterphosphorige Säure

Innerhalb von 3 h werden gleichmäßig zudoisiert:

Zulauf 1: 140 Teile Styrol
182 Teile Butandioldimethacrylat
133 Teile n-Butylacrylat
175 Teile t-Butylacrylat
70 Teile Thiomilchsäure
Zulauf 2: 70 Teile 4-Vinylpyridin

Innerhalb von 4 h wird gleichmäßig zudosiert:

| | | |
|---|---|---|
| Zulauf 3 | 161,2 | Teile Solvenon PM |
| | 161,2 | Teile Butylacetat 98/100 |
| | 22,4 | Teile Azobisisobutyronitril |

Zulauf 1, 2 und 3 werden gleichmäßig gestartet, während der Polymerisation wird die Temperatur bei 110°C gehalten, nach Zulaufende 3 wird 2 h nachpolymerisiert. Die erhaltene klare Acrylatharzlösung hat eine Viskosität von 2.1 dPa.s, einen Festkörper von 48,5% und eine Säurezahl von 52.

Acrylatharzlösung V

In einem 3 1-Edelstahlkessel werden vorgelegt:

| | | |
|---|---|---|
| Vorlage: | 266 | Teile Butylacetat 98/100 |
| | 266 | Teile Xylol |

Die Vorlage wird auf 112°C aufgeheizt und Zulauf 1 und 2 werden innerhalb 3 h bei 112°C gleichmäßig zudosiert.

| | | |
|---|---|---|
| Zulauf 1 | 70 | Teile Butylmethacrylat |
| | 105 | Teile Butandioldiacrylat |
| | 175 | Teile Styrol |
| | 210 | Teile t-Butylacrylat |
| | 70 | Teile 2-Ethylhexylacrylat |
| | 42 | Teile tert.-Dodecylmercaptan |

| | | |
|---|---|---|
| Zulauf 2 | 70 | Teile Maleinsäurenhydrid |
| | 70 | Teile Butylacetat 98/100 |
| | 70 | Teile Xylol |

Innerhalb von 3,5 h wird Zulauf 3 gleichmäßig zudosiert, Start aller Zuläufe gleichzeitig.

| | | |
|---|---|---|
| Zulauf 3 | 23,8 | Teile 2,2'Bis azo(2-methylbutyronitril) |
| | 47,6 | Teile Butylacetat 98/100 |
| | 47,6 | Teile Xylol |

Nach Ende Zulauf 3 wird 2 h bei 114°C nachpolymerisierte. Die Acrylatharzlösung hat einen Festkörper von 49% und eine Viskosität von 3,1 dPa.s.

Zu dieser Acrylatharzlösung werden

| | |
|---|---|
| 53,6 | Teile 2-Aminopyridin |
| 109 | Teile 2-Methoxipropylacetat-2 |

zugegeben und bei 80°C an das Maleinsäureanhydridcopolymerisat addiert. Nach 3,5 h bei 80°C ist die Umsetzung beendet, die klare und farblose Acrylatharzlösung hat eine Viskosität von 9,5 dPa.s, eine Säurezahl von 57, ein Aminäquivalentgewicht von 1400±20 und einen Festkörper von 49,4%.

Acrylatharzlösung VI

In einem 3 1-Edelstahlkessel werden vorgelegt.

| | | |
|---|---|---|
| Vorlage: | 197 | Teile 1-Methoxypropylacetat-2 |
| | 197 | Teile Butylacetat |

Die Vorlage wird auf 110°C aufgeheitz, innerhalb 3 h werden gleichmäßig Zulauf 1 und 2 zudosiert.

| | | |
|---|---|---|
| Zulauf 1 | 140 | Teile Styrol |
| | 140 | Teile Butandioldimethacrylat |
| | 70 | Teile Butandiolmonoacrylat |
| | 105 | Teile n-Butylacrylat |
| | 175 | Teile Teile t-Butylacrylat |
| | 31,5 | Teile Mercaptoethanol |

| | | |
|---|---|---|
| Zulauf 2 | 70 | Teile Imidazoylethylmethacrylat |

Zulauf 3 25,2 Teile 2,2'Bisazobutyronitril
181,3 Teile Butylacetat 98/100
181,3 Teile 1-Methoxypropylacetat-2

Innerhalb 4 h wird gleichmäßig Zulauf 3 zudiosiert. Start von Zulauf 1, 2 und 3 gleichzeitig, während der Polymerisation wird die Temperatur bei 110°C gehalten. Nach Zulaufende 3 weitere 3 h bei 110°C nachpolymerisieren. Die so erhaltene klare, farblose Acrylatharzlösung wird anschließend bei 120°C mit 81 Teilen Bernsteinsäureanhydrid zum COOH-Acrylat umgesetzt. Die erhaltene Acrylatharzlösung hat eine Viskosität von 7,2 dPa.s, einen Festkörper von 52,3% und eine Säurezahl von 68.

Acrylatharlösung VII
In einem 3 1-Edelstahlkessel wird vorgelegt:

286 Teile Xylol
286 Teile Butylacetat 98/100
143 Teile Butanol-2

Die Vorlage wird auf 110°C aufgeheitzt, innerhalb von 3 h werden gleichmäßig Zulauf 1 und 2 zudosiert.

Zulauf 1
183 Teile Methylmethacrylat
144 Teile β-Carboxiethylacryat
136 Teile tert.-Butylacrylat
97 Teile Divinylbenzol (Isomerengemisch, 62%ig in Ethylstyrol)
80 Teile Hydroxyethylmethacrylat
80 Teile n-Butylacrylat
44 Teile Mercaptoethanol

Zulauf 2
80 Teile Vinylpyridin

Innerhalb von 4 Stunden wird Zulauf 3 zudosiert, Start aller Zuläufe gleichzeitig, während der Polymerisation wird die Temperatur auf 110°C gehalten.

Zulauf 3
27,2 Teile 2,2'-Bisazo(2-methylbutyronitril)
62 Teile Xylol
62 Teile Butylacetat 98/100
31 Teile Butanol-2

Nach ende Zulauf 3 wird weitere 2 h bei 110°C nachpolymerisiert. Die so erhaltene klare Acrylatharzlösung hat einen Festkörper von 50,5%, eine Säurezahl von 64,2 und eine Viskosität von 12,0 dPa.s.

Acrylatharlösung VIII
In einem 3 1-Edelstahlkesel werden vorgelegt:

479 Teile Xylol
239 Teile Dimethylformamid

Die Vorlage wird auf 110°C aufgeheizt, und innerhalb von 3 h werden gleichmäßig Zulauf 1 und 2 zudosiert.

Zulauf 1
80 Teile Dimethylaminoethylmethacrylat
Zulauf 2
183 Teile Methylmethacrylat
80 Teile Hydroxibutylacrylat
47 Teile Divinylbenzol (Isomerengemisch, 61%ig in Ethylstyrol)
200 Teile tert.-Butylacrylat
80 Teile Hydroxiethylmethacrylat
80 Teile n-Butylacrylat
44 Teile Mercaptoethanol
0,24 Teile unterphosphorige Säure

Innerhalb von 4 h wird Zulauf 3 zudosiert. Der Start der Zuläufe 1, 2 und 3 erfolgt gleichzeitig.

Zulauf 3

27,2 Teile 2,2'-Bisazo(2-methylbutyronitril)
103 Teile Xylol
51 Teile Dimethylformamid

Während der Polymerisation wird die Temperatur bei 110°C gehalten, nach Ende von Zulauf 3 wird noch 2 h bei 110°C nachpolymerisiert. Danach werden 101 Teile Maleinsäureanhydrid zugegeben und bei 100°C an die Hydroxylgruppen des Copolymerisats addiert, bis die Säurezahl 71 und eine Viskosität (original, 23°C) von 8,2 dPa.s erreicht ist. Danach werden 340 Teile Lösungsmittelgemisch abdestilliert und mit 270 Teilen Butylacetat 98/100 angelöst. Die so erhaltene Lösung eines verzweigten Acylrats hat einen Festkörper von 56,6%, eine Viskosität von 13,5 dPa.s und eine Säurezahl von 70,5.

Acrylatharz IX

In einem 3 1-Edelstahlkessel werden vorgelegt:

480 Teile Xylol
240 Teile Dimethylformamid

Die Vorlage wird auf 110°C aufgeheizt, und innerhalb von 3 h wird der Zulauf 1 zudosiert:

160 Teile Methylmethacrylat
80 Teile Dimethylaminoethylmethacrylat
120 Teile n-Butylacrylat
200 Teile Styrol
100 Teile 1,4-Butandiolmonoacrylat
80 Teile Hydroxyethylmethacrylat
60 Teile Hexamethylenbismethacrylamid
28 Teile Mercaptoethanol
(Zulauf 1)

Innerhalb von 4 h wird Zulauf 2 zudosiert. Der Start von Zulauf 1 und 2 erfolgt gleichzeitig.

Zulauf 2

36 Teile tert.-Butylperethylhexanoat
96 Teile Xylol
48 Teile Dimethylformamid

Während der Polymerisation wird die Temperatur bei 110°C gehalten. Nach Ende von Zulauf 2 wird weitere 3 h bei 110°C nachpolymerisiert. Dann werden bei 100°C 101 Teile Maleinsäureanhydrid hinzugegeben und an das OH-Acrylat addiert, bis die Säurezahl 70 erreicht ist. Danach werden 227 Teile Lösungsmittelgemisch abdestilliert und 320 Teilen n-Butanol hinzugegeben. Die so erhaltene Lösung eines verzweigten Acrylatharzes hat einen Festkörper von 49,5%, eine Säurezahl von 68,3 und eine Viskosität von 18 dPa.s (original).

B) Herstellung von Tönpasten

Die Pigmentpasten wurden nach folgenden Rezepturen jeweils 40 min auf einer Laborsandmühle dispergiert (Kornfeinheit 10 µm).

Paste 25/2

| | |
|---|---|
| Acrylatharz II | 36,0 |
| Antiabsetzmittel | 1,5 |
| Schichtsilikat | 1,0 |
| Bleimolybdatpigment | 50,0 |
| Methoxypropylacetat | 13,0 |

Paste 25/3

| | |
|---|---|
| Acrylatharz I | 37,0 |
| Antiabsetzmittel | 1,5 |
| Titandioxid-Rutil-pigment | 53,0 |
| Methoxypropylacetat | 8,5 |

Paste 25/4

| | |
|---|---|
| Acrylatharz I | 90,0 |
| Kupfer-Phthalocyaningrünpigment | 8,0 |
| Methoxipropylacetat | 2,0 |

C) Herstellung und Prüfug von Lacken

Nach folgenden Rezepturen werden Decklacke angesetzt, mittels Rakel auf Glasplatten aufgezogen (Trockenschichtdicke 40 µm), bei Raumtemperatur oder forciert 30 Minuten bei 60°C getrocknet, 6 Tage bei Rauimptemperatur gelagert und dann geprüft.

Pendelhärte: Nach König

Benzin- (FAM Prüfkraftstoff nach DIN 51604) und Xylolbeständigkeit: 5 minütige Belastung durch ein mit dem jeweiligen Lösungsmittel getränktes Filzplättchen, abgedeckt.

Beispiel 1

| | |
|---|---|
| Acrylatharz I | 43,9 |
| Paste 25/3 | 43,9 |
| Siliconlösung | 1,0 |
| Epoxidharz auf Basis Bisphenol A mit einem EEW von 190 | 6,5 |
| Methoxipropylacetat | 4,7 |

Ergebnisse:

| Trocknung: | 30 min 60°C | Raumtemper. |
|---|---|---|
| Pendelhärte nach 6 Tagen: | 137 sec. | 101 sec |
| Bestandigkeit gegen Xylol nach 6 Tagen | i.O. | i.O. |
| Beständigkeit gegen Benzin nach 6 Tagen | i.O. | i.O. |

Beispiel 2

| | |
|---|---|
| Acrylatharz I | 44,8 |
| Paste 25/3 | 44,8 |
| Siliconlösung | 1,0 |
| 3,4-Epoxi-cyclohexylmethyl-3,4-epoxicyclohexancarboxylat | 4,4 |
| Methoxipropylacetat | 5,0 |

Ergebnisse:

| | Trocknung: 30′ 60°C | Raumtemper. |
|---|---|---|
| Pendelhärte nach 6 Tagen | 147 sec | 109 sec |
| Beständigkeit gegen Xylol nach 6 Tagen | i.O. | i.O. |
| Beständigkeit gegen Benzin nach 6 Tagen | i.O. | i.O. |

Beispiel 3

| | |
|---|---|
| Acrylatharz I | 31,5 |
| Paste 25/4 | 52,5 |
| Siliconlösung | 1,3 |
| Epoxidharz auf Basis Bisphenol A mit einem EEW von 190 | 8,6 |
| Methoxipropylacetat | 6,1 |

Ergebnisse:

| | Trocknung: 30 min 60°C | Raumtemper. |
|---|---|---|
| Pendelhärte nach 6 Tagen | 167 sec. | 111 sec. |
| Beständigkeit gegen Xylol nach 6 Tagen | i.O. | i.O. |
| Beständigkeit gegen Benzin nach 6 Tagen | i.O. | i.O. |

Beispiel 4

| | |
|---|---|
| Acrylatharz II | 43,7 |
| Paste 25/3 | 43,7 |
| Siliconlösung | 1,0 |
| Epoxidharz auf Basis Bisphenol A mit einem EEW von 190 | 6,9 |
| Methoxipropylacetat | 4,7 |

Ergebnisse:

| | Trocknung: 30 min 60°C | Raumtemp. |
|---|---|---|
| Pendelhärte nach 6 Tagen | 67 sec. | 72 sec. |
| Bestandigkeit gegen Xylol nach 6 Tagen | i.O. | leichte |
| Bestandigkeit gegen Benzin nach 6 Tagen | i.O. | leichte Markierung |

Beispiel 5

Acrylatharz VII wird mit einem Polyglycidylether auf Basis Sorbitol (Epoxidäquivalentgewicht 180) im Verhältnis 82/18 (fest auf fest) gemischt, mit Butylacetat auf 25″ DIN 4 verdünnt und auf Glastafeln Aufgerakelt (Naßfilmstärke 200 µm).

| | Trockunung: | 30 min. 60° | RT |
|---|---|---|---|
| Pendelhärte nach 3 Tagen | | 98'' | 81'' |
| Vernetzungstest Methylethylketon (Doppelhübe) | | 200 DH | 200 DH |

Beispiel 6

Acrylatharz VIII wird mit einem Novolak-Polyglycidylether (Epoxidäquivalentgewicht 178) im Verhältnis 82/18 (fest auf fest) gemischt, mit Xylol verdünnt und auf Glastafeln aufgerakelt (200 μm Naßfilmstärke). Nach 6 Tagen Trocknung bei Raumtemperatur wird eine Pendelhärte von 70'' erreicht. Der Vernetzungstest mit Methylethylketon ergibt 155 Doppelhübe.

**Patentansprüche**

1. Lösliches, vorvernetztes Acrylatcopolymerisat, erhältlich durch Copolymerisation von Monomeren mit mindestens zwei polymerisierbaren, olefinisch ungesättigten Doppelbindungen, funktionelle Gruppen tragenden Monomeren und weiteren polymerisierbaren Monomeren mit einer olefinisch ungesättigten Doppelbindung, wobei das Acrylatcopolymerisat Carboxylgruppen enthält, dadurch gekennzeichnet, daß zu seiner Herstellung

a1) 5 bis 30 Gewichts-% eines Monomeren mit mindestens zwei polymerisierbaren, olefinisch ungesättigten Doppelbindungen,

a2) 3 bis 30 Gewichts-%, bevorzugt 5—20 Gewichts-%, eines carboxylgruppenhaltigen Monomeren und

a3) mindestens 40 Gewichts-% weiterer Monomeren mit einer polymerisierbaren, olefinisch ungesättigten Doppelbindung,

wobei die Summe von a1), a2) und a3) 100 Gewichts-% beträgt, in einem organischen LÖsungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die Polymerisation so durchgeführt wird, daß eine Lösung des Polymerisats mit einem Festkörpergehalt von 40 bis 65 Gewichts-% resultiert und die Säurezahl des Acrylatcopolymerisats 15 bis 200, bevorzugt 30 bis 120, beträgt.

2. Lösliches, vorvernetztes Acrylatcopolymerisat nach Anspruch 1, dadurch gekennzeichnet, daß als weitere Monomer mit einer polymerisierbaren, olefinisch ungesättigten Doppelbindung 0,1 bis 5 Gewichts-%, bezogen auf das Gesamtgewicht aller Monomeren, Monomere mit Phosphorsäuregruppen eingesetzt sind.

3. Lösliches, vorvernetztes Acrylatcopolymerisat, erhältlich durch Copolymerisation von Monomeren mit mindestens zwei polymerisierbaren, olefinisch ungesättigten Doppelbindungen, funktionelle Gruppen tragenden Monomeren und weiteren polymerisierbaren Monomeren mit einer olefinisch ungesättigten Doppelbindung, wobei das Acrylatcopolymerisat Carboxylgruppen enthält, dadurch gekennzeichnet, daß zu seiner Herstellung

a1) mehr als 3 bis 30 Gewichts-%, bevorzugt 5 bis 25 Gewichts-%, eines Monomeren mit mindestens zwei polymeriserbaren, olefinisch ungesättigten Doppelbindungen, wobei Di- und Polyester von Di- und Polyolen mit Acrylsäure ausgenommen sind,

a2) 3 bis 30 Gewichts-%, bevorzugt 5 bis 20 Gewichts-%, eines carboxylgruppenhaltigen Monomeren,

a4) 0,1 bis 20 Gewichts-%, bevorzugt 1 bis 14 Gewichts-%, eines tertiären Amins mit einer polymerisierbaren, olefinisch ungesättigten Doppelbindung,

a5) 0 bis 40 Gewichts-%, bevorzugt 5 bis 25 Gewichts-%, eines hydroxylgruppenhaltigen Monomeren und

a3) 0 bis 80 Gewichts-% weiterer Monomerer mit einer polymerisierbaren, olefinisch ungesättigten Doppelbindung,

wobei die Summe der Komponenten a1), a2), a3), a4) und a5) 100 Gewichts-% beträgt, in einem organischen Lösungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die Polymerisation so durchgeführt wird, daß eine Lösung des Polymerisats mit einem Festkörpergehalt von 40 bis 65 Gewichts-% resultiert und die Säurezahl des Acrylatcopolymerisats 15 bis 200, bevorzugt 30 bis 120, beträgt.

4. Lösliches, vorvernetztes Acrylatcopolymerisat nach Anspruch 3, dadurch gekennzeichnet, daß als weitere Monomere mit einer polymerisierbaren, olefinisch ungesättigten Doppelbindung 0,1 bis 5 Gewichts-%, bezogen auf das Gesamtgewicht aller Monomeren, Monomere mit Phosphorsäuregruppen eingesetzt sind.

5. Lösliches, vorvernetztes Acrylatcopolymerisat, erhältlich durch Copolymerisation von Monomeren mit mindestens zwei polymerisierbaren, olefinisch ungesättigten Doppelbindungen, funktionelle Gruppen

tragenden monomeren und weiteren polymerisierbaren Monomeren mit einer olefinisch ungesättigten Doppelbindung, wobei das Acrylatcopolymerisat Carboxylgruppen enthält, dadurch gekennzeichnet, daß zu seiner Herstellung

a1) mehr als 3 bis 30 Gewichts-%, bevorzugt 5 bis 25 Gewichts-%, eines Monomeren mit mindestens zwei polymeriserbaren, olefinisch ungesättigten Doppelbindungen, wobei Di- und Polyester von Di- und Polyolen mit Acrylsäure ausgenommen sind,

a4) 0,1 bis 20 Gewichts-% bevorzugt 1 bis 14 Gewichts-%, eines tertiären Amins mit einer polymerisierbaren, olefinisch ungesättigten Doppelbindung,

a5) 0 bis 40 Gewichts-%, bevorzugt 10 bis 30 Gewichts-%, hydroxylgruppenhaltiger Monomerer und

a3) 0 bis 80 Gewichts-% weiterer polymerisierbaren Monomerer mit einer olefinisch ungesättigten Doppelbindung,

wobei die Summe von a1), a3), a4) und a5) 100 Gewichts-% beträgt, in einem organischen Lösungsmittel bei 70 bis 130°C, vorzugsweise bei 80 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die Polymerisation so durchgeführt wird, daß ein Festkörpergehalt der Lösung des Polymerisats von 40 bis 65 Gewichts-% resultiert, nach Beendigung der Copolymerisation die Umsetzung mit a6) cyclischen Carbonsäureanhydriden erfolgt und die Säurezahl des Acrylatcopolymerisats 15 bis 200, bevorzugt 30 bis 120, beträgt.

6. Lösliches, vorvernetztes Acrylatcopolymerisat, erhältlich durch Copolymerisation von Monomeren mit mindestens zwei polymerisierbaren, olefinisch ungesättigten Doppelbindungen, funktionelle Gruppen tragenden Monomeren und weiteren polymerisierbaren Monomeren mit einer olefinisch ungesättigten Doppelbindung, wobei das Acrylatcopolymerisat Carboxylgruppen enthält, dadurch gekennzeichnet, daß zu seiner Herstellung

a1) mehr als 3 bis 30 Gew.-%, bevorzugt 5 bis 25 Gew.-%, Monomere mit mindestens zwei polymerisierbaren olefinisch ungesättigten Doppelbindungen,

a7) 1 bis 25 Gew.-%, bevorzugt 3 bis 15 Gew.-%, Monomere mit cyclischen Carbonsäureanhydridgruppen und

a3) 45 bis 80 Gew.-% weitere polymerisierbare Monomere mit einer olefinisch ungesättigten Doppelbindung,

wobei die Summe von a1), a3) und a7) 100 Gew.-% beträgt, in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren copolymerisiert werden, die Polymerisation zur Herstellung des Copolymerisats so durchgeführt wird, daß eine Lösung des Polymerisats mit einem Festkörpergehalt von 40 bis 65 Gew.-% resultiert, nach Beendigung der Copolymerisationsreaktion die Umsetzung des Copolymerisats mit

a8) Verbindungen, die sowohl mindestens einen mit Säureanhydridgruppen reaktionsfähigen Wasserstoff als auch mindestens eine tertiäre Aminogruppe enthalten, sowie gegebenenfalls mit monofunktionellen Verbindungen mit aktivem Wasserstoff

erfolgt und die Säurezahl des Acrylatcopolymerisats 15 bis 200, bevorzugt 30 bis 120, beträgt.

7. Lösliches, vorvernetztes Acrylatcopolymerisat nach Anspruch 6, dadurch gekennzeichnet, daß die Komponente a8) eine Alkohol ist, welcher eine tertiäre Aminogruppe enthält.

8. Lösliches, vorvernetztes Acrylatcopolymerisat nach Anspruch 6 oder 7, dadurch gekennzeichnet, daß die Komponente a8) ein primäres oder sekundäres Amin mit einer tertiären Aminogruppe ist.

9. Lösliches, vorvernetztes Acrylatcopolymerisat, erhältlich durch Copolymerisation von Monomeren mit mindestens zwei polymerisierbaren, olefinisch ungesättigten Doppelbindungen, funktionelle Gruppen tragenden Monomeren und weiteren polymerisierbaren Monomeren mit einer olefinisch ungesättigten Doppelbindung, wobei das Acrylatcopolymerisat Carboxylgruppen enthält, dadurch gekennzeichnet, daß zu seiner Herstellung

a1) mehr als 3 bis 30 Gew.-%, bevorzugt 5 bis 25 Gew.-%, Monomere mit mindestens zwei polymerisierbaren, olefinisch ungesättigten Doppelbindungen,

a9) 1 bis 30 Gew.-% von Glycidylestern von ethylenisch ungesättigten Carbonsäuren und/oder Glycidylethern von olefinisch ungesättigten Verbindung und

a3) 40 bis 95 Gew.-% weitere polymerisierbare Monomere mit einer olefinisch ungesättigten Doppelbindung,

wobei die Summe aller Monomerer 100 Gew.-% beträgt, in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bvezogen auf das Gesamtgewicht der Monomeren, eines Polymerisationsreglers und unter Verwendung von Polymerisationsinitiatoren copolymerisiert werden, die Polymerisation zur Herstellung des Copolymerisats so durchgeführt wird, daß eine Lösung des Polymerisats mit einem Festkörpergehalt von 40 bis 65 Gew.-% resultiert, nach Beendigung der Copolymerisationsreaktion die Umsetzung mit

a10) Aminen mit einer sekundären Aminogruppe oder Di- oder Polyaminen mit mindestens einer tertiären Aminogruppe und einer primären oder sekundären Aminogruppe und/oder

a11) Carbonsäuren, die ein tertiäres Stickstoffatom enthalten, und mit
a6) cyclischen Carbonsäureanhydriden
erfolgt und die Säurezahl des Acrylatcopolymerisats 15 bis 200, vorzugsweise 30 bis 120, beträgt.

10. Lösliches, vorvernetztes Acrylatcopolymerisat nach Anspruch 3, 4 oder 5, dadurch gekennzeichnet, daß das Monomere mit mindestens 2 polymerisierbaren, olefinisch ungesättigten Doppelbindungen der Formel

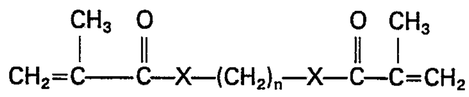

entspricht, in der bedeuten:
X = O, NR', S mit R' = H, Alkyl, Aryl
n = 2 bis 8.

11. Lösliches, vorvernetztes Acrylatcopolymerisat nach Anspruch 1, 2, 6, 7, 8 oder 9, dadurch gekennzeichnet, daß das Monomere mit mindestens zwei polymerisierbaren, olefinisch ungesättigten Doppelbindungen der allgemeinen Formel

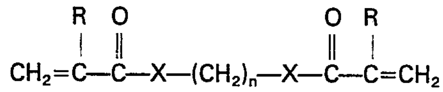

entspricht, in der bedeuten:
R = H oder $CH_3$,
X = O, NR', S mit R' = H, Alkyl, Acryl
n = 2 bis 8.

12. Lösliches, vorvernetztes Acrylatcopolymerisat nach Anspruch 3, 4 oder 5, dadurch gekennzeichnet, daß das Monomere mit mindestens zwei polymerisierbaren, olefinisch ungesättigten Doppelbindungen ein Umsetzungsprodukt aus einer Carbonsäure mit einer polymerisierbaren, olefinisch ungesättigten Doppelbindung, wobei ACrylsäure ausgeschlossen ist, und Glycidylmethacrylat ist.

13. Lösliches, vorvernetztes Acrylatcopolymerisat nach Anspruch 1, 2, 6, 7, 8 oder 9, dadurch gekennzeichnet, daß das Monomere mit mindestens zwei polymerisierbaren, olefinisch ungesättigten Doppelbindungen ein Umsetzungsprodukt aus einer Carbonsäure mit einer polymerisierbaren, olefinisch ungesättigten Doppelbindung und Glycidylacrylat und/oder Glycidylmethacrylat ist.

14. Lösliches, vorvernetztes Acrylatcopolymerisat nach Anspruch 3, 4 oder 5, dadurch gekennzeichnet, daß das Monomere mit mindestens zwei polymerisierbaren, olefinisch ungesättigten Doppelbindungen eine mit einem ungesättigten, eine polymerisierbare Doppelbindung enthaltenden Alkohol veresterte Polycarbonsäure oder umgesättigte Monocarbonsäure mit Ausnahme von Derivaten der Acrylsäure ist.

15. Lösliches, vorvernetztes Acrylatcopolymerisat nach Anspruch 1, 2, 6, 7, 8 oder 9, dadurch gekennzeichnet, daß das Monomer mit mindestens 2 polymerisierbaren, olefinisch ungesättigten Doppelbindungen eine mit einem ungesättigten, eine polymerisierbare Doppelbindung enthaltenden Alkohol veresterte Polycarbonsäure oder ungesättigte Monocarbonsäure ist.

16. Lösliches, vorvernetztes Acrylatcopolymerisat nach einem der Ansprüche 1 bis 9, dadurch gekennzeichnet, daß das Monomeren mit mindestens 2 polymerisierbaren, olefinisch ungesättigten Doppelbindungen durch Umsetzung eines Polyisocyanats mit ungesättigte, polymerisierbare Doppelbindungen enthaltenden Alkoholen oder Aminen herstellbar ist.

17. Lösliches, vorvernetztes Acrylatcopolymerisat nach Anspruch 3, 4 oder 5, dadurch gekennzeichnet, daß das Monomer mit mindestens 2 polymerisierbaren, olefinisch ungesättigten Doppelbindungen ein Diester von Polyethylenglykol und/oder Polypropylenglykol mit einem mittleren Molekulargewicht von weniger als 1.500, bevorzugt weniger als 1.000, und Methacrylsäure ist.

18. Lösliches, vorvernetztes Acrylatcopolymerisat nach Anspruch 1, 2, 6, 7, 8 oder 9, dadurch gekennzeichnet, daß das Monomer mit mindestens 2 polymerisierbaren, olefinisch ungesättigten Doppelbindungen ein Diester von Polyethylenglykol und/oder Polypropylenglykol mit einem mittleren Molekulargewicht von weniger als 1.500, bevorzugt weniger als 1.000, und Acrylsäure und/oder Methacrylsäure ist.

19. Lösliches, vorvernetztes Acrylatcopolymerisat nach Anspruch 1, 2, 3 oder 4, dadurch gekennzeichnet, daß das carboxylgruppenhaltige Monomere (Komponente $a_2$) β-Carboxyethylacrylat ist.

20. Lösliches, vorvernetztes Acrylatcopolymerisat nach Anspruch 3, 4 oder 5, dadurch gekennzeichnet, daß als hydroxylgruppenhaltige Monomere Umsetzungsprodukte aus Acrylsäure und/oder Methacrylsäure mit dem Glycidylester einer Carbonsäure mit einem tertiären α-Kohlenstoffatom eingesetzt wird.

21. Lösliches, vorvernetztes Acrylatcopolymerisat nach einem der Ansprüche 1 bis 20, dadurch gekennzeichnet, daß die weiteren polymerisierbaren Monomeren mit einer olefinisch ungesättigten Doppelbindung ausgewählt sind aus der Gruppe Styrol, Vinyltoluol, Alkylester der Acrylsäure und Methacrylsäure, Alkoxyethylacrylate und Aryloxyethylacrylate und der entsprechenden Methacrylate, Ester der Malein- und Fumarsäure.

22. Lösliches, vorvernetztes Acrylatcopolymerisat nach einem der Ansprüche 1 bis 21, dadurch gekennzeichnet, daß die Polymerisation in Gegenwart eines chlorierten Polyolefins durchgeführt wird, wobei das Verhältnis Acrylat zu Polyolefin 98:2 bis 30:70 betragen kann.

23. Verfahren zur Herstellung des löslichen, vorvernetzten Acrylatcopolymerisats nach Anspruch 1, 2, 3 oder 4, dadurch gekennzeichnet, daß zu seiner Herstellung die Monomeren in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden, wobei die Polymerisation zur Herstellung des Acrylatcopolymerisats so durchgeführt wird, daß eine Lösung des Polymerisats mit einem Festkörpergehalt von 40 bis 65 Gew.-% resultiert.

24. Verfahren zur Herstellung des löslichen Acrylatcopolymerisats nach Anspruch 5, dadurch gekennzeichnet, daß zu seiner Herstellung zunächst die Monomeren in einem organischen Lösungsmittel bei 70 bis 130°C, vorzugsweise bei 120°C unter Verwendung von mindestens 0,5 Gew.-%, vorzugsweise mindestens 2,5 Gew.-%, bezogen auf das Gesamtgewicht aller Monomeren, eines Polymerisationsreglers und unter Verwendung von Polymerisationsinitiatoren zu einem vorvernetzten, nicht gelierten Produkt copolymerisiert werden, wobei die Polymerisation zur Herstellung des Acrylatcopolymerisats so durchgeführt wird, daß eine Lösung des Polymerisats mit einem Festkörpergehalt von 40 bis 65 Gew.-% resultiert und nach Beendigung der Copolymerisation die Umsetzung mit den cyclischen Carbonsäureanhydriden (a6) erfolgt.

25. Verfahren zur Herstellung des löslichen Acrylatcopolymerisats nach Anspruch 6, 7 oder 8, dadurch gekennzeichnet, daß zu seiner Herstellung zunächst die Monomeren in einem organischen Lösungsmittel bei 70 bis 130°C, vorzugsweise bei 80 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden, wobei die Polymerisation zur Herstellung des Acrylatcopolymerisats so durchgeführt wird, daß eine Lösung des Polymerisats mit einem Festkörpergehalt von 40 bis 65 Gew.-% resultiert, als Regler Mercaptane mit primären SH-Gruppen ausgenommen sind und nach Beendigung der Copolymerisationsreaktion die Umsetzung ds Copolymerisats mit den Verbindungen a8) erfolgt.

26. Verfahren zur Herstellung des löslichen Acrylatcopolymerisats nach Anspruch 9, dadurch gekennzeichnet, daß zu seiner Herstellung zunächst die Monomeren in einem organischen Lösungsmittel bei 70°C bis 130°C, vorzugsweise bei 80°C bis 120°C, unter Verwendung von mindestens 0,5 Gew.-%, vorzugsweise mindestens 2,5 Gew.-%, bezogen auf das Gesamtgewicht der Monomeren, eines Polymerisationsreglers, wobei Thiocarbonsäuren ausgenommen sind, und unter Verwendung von Polymerisationsinitiatoren zu einem vorvernetzten, nicht gelierten Produkt copolymerisiert werden, wobei die Polymerisation zur Herstellung des Acrylatcopolymerisats so durchgeführt wird, daß eine Lösung des Polymerisats mit einem Festkörpergehalt von 40 bis 65 Gew.-% resultiert, und nach Beendigung der Copolymerisationsreaktion die Umsetzung mit a10) und/oder a11) und mit a6) erfolgt.

27. Verfahren nach Anspruch 23 oder 24 dadurch gekennzeichnet, daß als Polymerisationsregler Mercaptogruppen enthaltende Verbindungen, vorzugsweise Mercaptoethanol, verwendet werden.

28. Verfahren nach Anspruch 25, dadurch gekennzeichnet, daß als Regler Mercaptogruppenenthaltende Verbindungen außer Mercaptanen mit primären SH-Gruppen verwendet werden.

29. Verfahren nach einem der Ansprüche 23 bis 28, dadurch gekennzeichnet, daß als Initiatoren Azoverbindungen und/oder Peroxiester verwendet werden.

30. Überzugsmittel, enthaltend als wesentliche Bindemittel

A) ein Acrylatcopolymerisat, hergestellt nach den Verfahren nach einem der Ansprüche 23 bis 29, und

B) eine mindestens zwei Epoxidgruppen pro Molekül enthaltende Verbindung,

wobei das Verhältnis von A) zu B) so gewählt wird, daß das Verhältnis der Säuregruppen von A zu den Epoxidgruppen von B im Bereich von 0,5:3 bis 2:0,5 liegt und gegebenenfalls ein Vernetzungskatalysator verwendet wird.

31. Überzugsmittel nach Anspruch 30, dadurch gekennzeichnet, daß der Vernetzungskatalysator in einer Menge von 0,5 bis 10 Gew.-%, bezogen auf das Gewicht der Di- bzw. Polyepoxidkomponente, verwendet wird.

32. Verfahren zur Herstellung eines Überzugsmittels nach Anspruch 30 oder 31, dadurch gekennzeichnet, daß zu seiner Herstellung ein Acrylatcopolymerisat A) nach Anspruch 23 bis 29 hergestellt wird und dieses mit B), einer Verbindung, die mindestens zwei Epoxidgruppen pro Molekül enthält, gegebenenfalls unter Mitverwendung eines Vernetzungskatalysators, sowie mit organischen Lösungsmitteln, gegebenenfalls Pigmenten und üblichen Hilfsstoffen und Additiven durch Mischen und gegebenenfalls Dispergieren zu einer Überzugsmasse verarbeitet wird, wobei das Verhältnis von A) zu B) so gewählt wird, daß das Verhältnis der Säuregruppen von A) zu den Epoxidgruppen von B) im Bereich von 0,5:3 bis 2:0,5 liegt.

33. Verfahren zur Herstellung eines Überzugs, bei dem ein Überzugsmittel nach Anspruch 30 oder 31 durch Spritzen, Fluten, Tauchen, Walzen, Rakeln oder Streichen auf ein Substrat in Form eines Films aufgebracht wird und der Film zu einem festhaftenden Überzug gehärtet wird.

34. Beschichtetes Substrat, erhalten durch das Verfahren nach Anspruch 33.

**Revendications**

1. Copolymère d'acrylate, pré-réticulé, soluble, que l'on peut obtenir par copolymérisation de monomères ayant au moins deux doubles liaisons d'insaturation oléfinique, polymérisables, de monomères portant des groupes fonctionnels, et d'autres monomères polymérisables ayant une double liaison d'insaturation oléfinique, le copoloymère d'acrylate contenant des groupes carboxyle, carctérisé par le fait que, pour sa préparation,

a1) 5 à 30% en poids d'un monomère ayant au moins deux doubles liaisons d'insaturation oléfinique, polymérisables,

a2) 3 à 30% en poids, de préférence, 5—20% en poids, d'un monomère contenant un groupe carboxyle, et

a3) au moins 40% en poids d'autres monomères ayant une double liaison d'insaturation oléfinique, polymérisable,

la somme de a1), a2) et a3) s'élevant à 100% en poids, sont copolymérisés, dans un solvant organique, à une température de 70 à 130°C, de préférence, à une température de 80 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation est conduite de telle sorte qu'il en résulte une solution du polymère ayant une teneur en corps solides de 40 à 65% en poids, et l'indice d'acide du copolymère d'acrylate s'élève à une valeur de 15 à 200, de préférence, de 30 à 120.

2. Copolymère d'acrylate pré-réticulé, soluble, selon la revendication 1, caractérisé par le fait que sont utilisés, comme autres monomères ayant une double liaison d'insaturation oléfinique, polymérisable, 0,1 à 5% en poids, par rapport au poids total de tous les monomères, de monomères ayant des groupes acide phosphorique.

3. Copolymère d'acrylate pré-réticulé, soluble, que l'on peut obtenir par copolymérisation de monomères ayant au moins deux doubles liaisons d'insaturatin oléfinique, polymérisables, de monomères portant des groupes fonctionnels, et d'autres monomères polymérisables ayant une double liaison d'insaturation oléfinique, le copoloymère d'acrylate contenant des groupes carboxyle, caractérisé par le fait que, pour sa préparation

a1) plus de 3 à 30% en poids, de préférence, 5 à 25% en poids, d'un monomère ayant au moins deux doubles liaisons d'insaturation oléfinique, polymérisables, à l'exception des di-et polyester de di- et polyols avec l'acide acrylique,

a2) 3 à 30% en poids, de préférence, 5 à 20% en poids, d'un monomère renfermant un groupe carboxyle,

a4) 0,1 à 20% en poids, de préférence, 1 à 14% en poids, d'une amine tertiaire ayant une double liaison d'insaturation oléfinique, polymérisable,

a5) 0 à 40% en poids, de préférence, 5 à 25% en poids, d'un monomère renfermant un groupe hydroxyle, et

a3) 0 à 80% en poids d'autres monomères ayant une double liaison d'insaturation oléfinique, polymérisable,

la somme des composants a1), a2), a3), a4) et a5) s'élevant à 100% en poids, sont copolymérsés dans un solvant organique, à une température de 70 à 130°C, de préférence, à une température de 80 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation est conduite de telle sorte qu'il en résulte une solution du polymère ayant une teneur en corps solides allant de 40 à 65% en poids, et l'indice d'acide du copolymère d'acrylate s'élève à une valeur de 15 à 200, de préférence 30 à 120.

4. Copolymère d'acrylate pré-réticulé, soluble, selon la revendication 3, caractérisé par le fait qu'on utilise, comme autres monomères ayant une double liaison d'insaturation oléfinique, polymérisable, 0,1 à 5% en poids, par rapport au poids total de tous les monomères, de monomères ayant des groupes acide phosphorique.

5. Copolymère d'acrylate pré-réticulé, soluble, que l'on peut obtenir par copolymérisation de monomères ayant au moins deux doubles liaisons d'insaturation oléfinique, polymérisables, de monomères portant des groupes fonctionnels, et d'autres monomères polymérisables ayant une double liaison d'insaturation oléfinique, le copolymère d'acrylate renfermant des groupes carboxyle, caractérisé par le fait que, pour sa préparation,

a1) plus de 3 à 30% en poids, de préférence, 5 à 25% en poids, d'un monomère ayant au moins deux doubles liaisons d'insaturation oléfinique, polymérisables, à l'exception des di-et polyester de di- et polyols avec l'acide acrylique,

a4) 0,1 à 20% en poids, de préférence, 1 à 14% en poids, d'une amine tertiaire ayant une double liaison d'insaturation oléfinique, polymérisable,

a5) 5 à 40% en poids, de préférence, 10 à 30% en poids, d'un monomères contenant des groupes hydroxyle, et

a3) 0 à 80% en poids d'autres monomères polymérisables ayant une double liaison d'insaturation oléfinique,

la somme de a1), a3), a4) et a5) s'élevant à 100% en poids sont copolymérisés dans un solvant organique, à une température de 70 à 130°C, de préférence, à une température de 80 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation est conduite de sorte qu'il en résulte une teneur en corps solides de la solution du polymère de 40 à 65% en poids, après l'achèvement de la copolymérisation, a lieu la réaction avec a6) des anhydrides d'acides carboxyliques cycliques, et l'indice d'acide du copolymère d'acrylate s'élève à une valeur de 15 à 200, de préférence, de 30 à 120.

6. Copolymère d'acrylate pré-réticulé, soluble, que l'on peut obtenir par copolymérisation de monomères ayant au moins deux doubles liaisons d'insaturation oléfinique, polymérisables, de monomères portant des groupes fonctionnels et d'autres monomères polymérisables ayant une double liaison d'insaturation oléfinique, le copolymère d'acrylate renfermant des groupes carboxyle, caractérisé par le fait, pour sa préparation,

a1) plus de 3 à 30% en poids, de préférence, 5 à 25% en poids, de monomères ayant au moins deux doubles liaisons d'insaturation oléfinique, polymérisables,

a7) 1 à 25% en poids, de préférence, 3 à 15% en poids, de monomères ayant des groupes anhydride d'acide carboxylique cycliques; et

a3) 45 à 80% en poids d'autres monomères polymérisables ayant une double liaison d'insaturation oléfinique,

la somme de a1, a3) et a7) s'élevant à 100% en poids, sont copolymérisés dans un solvant organique, à une température de 70 à 120°C, de préférence, à une température de 80 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, la polymérisation en vue de la préparation du copolymère est conduite de telle sorte qu'il en résulte une solution du polymère ayant une teneur en corps solides de 40 à 65% en poids, après l'achèvement de la réaction de copolymérisation, a lieu la réaction du copolymère avec

a8) des composés, qui contiennent non seulement au moins un hydrogène capable de réagir avec des groupes anhydride d'acide, mais encore au moins un groupe amino tertiaire, de même que, le cas échéant, avec des composés monofonctionnels ayant un hydrogène actif,

et l'indice d'acide du copolymère d'acrylate s'élève à une valeur de 15 à 200, de préférence, de 30 à 120.

7. Copolymère d'acrylate pré-réticulé, soluble, selon la revendication 6, caractérisé par le fait que le composant a8) est un alcool, lequel contient un groupe amino tertiaire.

8. Copolymère d'acrylate pré-réticulé, soluble, selon l'une des revendications 6 ou 7, caractérisé par le fait que le composant a8) est une amine primaire ou secondaire avec un groupe amino tertiaire.

9. Copolymère d'acrylate pré-réticulé, soluble, que l'on peut obtenir par copolymérisation de monomères ayant au moins deux doubles liaisons d'insaturation oléfinique, polymérisables, de monomères portant des groupes fonctionnels, et d'autres monomères polymérisables ayant une double liaison d'insaturation oléfinique, le copolymère d'acrylate contenant des groupes carboxyle, caractérisé par le fait que, pour sa préparation,

a1) plus de 3 à 30% en poids, de préférence, 5 à 25% en poids, de monomères ayant au moins deux doubles liaisons d'insaturation oléfinique, polymérisables,

a9) 1 à 30% en poids d'esters glycidyliques d'acides carboxyliques à insaturation éthylénique et/ou de glycidyl éthers de composés à insaturation oléfinique, et

a3) 40 à 95% en poids d'autres monomères polymérisables ayant une double liaison d'insaturation oléfinique,

la somme de tous les momomères s'élevant à 100% en poids, sont copolymérisés dans un solvant organique, à une température de 70 à 130°C, de préférence, à une température de 80 à 120°C, avec utilisation d'au moins 0,5% en poids, de préférence, d'au moins 2,5% en poids, par rapport au poids total des momomères, d'un régulateur de polymérisation, et avec utilisation d'initiateurs de polymérisation, la polymérisation en vue de la préparation du copolymère est conduite de telle sorte qu'il en résulte une solution du polymère ayant une teneur en corps solides de 40 à 65% en poids, après l'achèvement de la réaction de copolymérisation a lieu la réaction avec

a10) des amines ayant un groupe amino secondaire ou des di- ou polyamines ayant au moins un groupe amino tertiaire et un groupe amino primaire ou secondaire, et/ou

a11) des acides carboxyliques, qui contiennent un atome d'azote tertiaire, et avec

a6) des anhydrides d'acides carboxyliques cycliques, et l'indice d'acide du copolymère d'acrylate s'élève à une valeur de 15 à 200, de préférence, de 30 à 120.

10. Copolymère d'acrylate pré-réticulé, soluble, selon l'une des revendications 3, 4 ou 5, caractérisé par le fait que le monomère ayant au moins 2 doubles liaisons d'insaturation oléfinique, polymérisables, correspond à la formule:

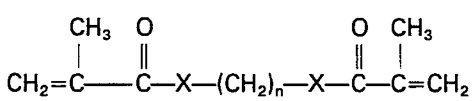

dans laquelle:
X = O, NR', S avec R' = H, alkyle, aryle
n = 2 à 8.

11. Copolymère d'acrylate pré-réticulé, soluble, selon l'une des revendications 1, 2, 6, 7, 8 ou 9, caractérisé par le fait que le monomère ayant au moins deux doubles liaisons d'insaturation oléfinique, polymérisable, correspond à la formule générale:

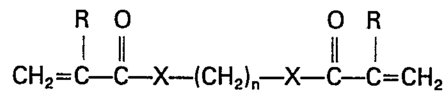

dans laquelle:
R = H ou $CH_3$,
X = O, NR', S avec R' = H, alkyle, aryle
n = 2 à 8.

12. Copolymère d'acrylate pré-réticulé, soluble, selon l'une des revendications 3, 4 ou 5, caractérisé par le fait que le monomère ayant au moins deux doubles liaisons d'insaturation oléfinique, polymérisables, est un produit de réaction d'un acide carboxylique ayant une double liaison d'insaturation oléfinique, polymérisable, à l'exception de l'acide acrylique, et du méthacrylate de glycidyle.

13. Copolymère d'acrylate pré-réticulé, soluble, selon l'une des revendications 1, 2, 6, 7, 8 ou 9, caractérisé par le fait que le monomère ayant au moins deux doubles liaisons d'insaturation oléfinique, polymérisables, est un produit de réaction d'un acide carboxylique ayant une double liaison d'insaturation oléfinique, polymérisable et de l'acrylate de glycidyle et/ou du méthacrylate de glycidyle.

14. Copolymère d'acrylate pré-réticulé, soluble, selon l'une des revendications 3, 4 ou 5, caractérisé par le fait que le monomère ayant au moins deux doubles liaisons d'insaturation oléfinique, polymérisables, est un acide polycarboxylique ou un acide monocarboxylique insaturé, qui sont estérifiés par un alcool insaturé, contenant une double liaison polymérisable, à l'exclusion des dérivés de l'acide acrylique.

15. Copolymère d'acrylate pré-réticulé, soluble, selon l'une des revendications 1, 2, 6, 7, 8 ou 9, caractérisé par le fait que le monomère ayant au moins 2 doubles liaisons d'insaturation oléfinique, polymérisables, est un acide polycarboxylique ou un acide monocarboxylique insaturé, qui sont estérifiés par un alcool insaturé, contenant une double liaison polymérisable.

16. Copolymère d'acrylate pré-réticulé, soluble, selon l'une des revendications 1 à 9, caractérisé par le fait le monomère ayant au moins 2 doubles liaisons d'insaturation oléfinique, polymérisables, peut être préparé par réaction d'un polyisocyanate avec des alcools ou amines insaturé(e)s, contenant des doubles liaisons polymérisables.

17. Copolymère d'acrylate pré-réticulé, soluble, selon l'une des revendications 3, 4 ou 5, caractérisé par le fait que le monomère ayant au moins 2 doubles liaisons d'insaturation oléfinique, polymérisables, est un diester de polyéthylèneglycol et/ou de polypropylène glycol ayant une masse moléculaire moyenne de moins de 1500, de préférence, de moins de 1000, et d'acide méthacrylique.

18. Copolymère d'acrylate pré-réticulé, soluble, selon l'une des revendications 1, 2, 6, 7, 8 ou 9, caractérisé par le fait que le monomère ayant au moins 2 doubles liaisons d'insaturation oléfinique, polymérisables, est un diester de polyéthylèneglycol et/ou de polypropylèneglycol ayant une masse moléculaire moyenne de moins de 1500, de préférence, de moins de 1000, et d'acide acrylique et/ou d'acide méthacrylique.

19. Copolymère d'acrylate pré-réticulé, soluble, selon l'une des revendications 1, 2, 3 ou 4, caractérisé par le fait que le momomère contenant un groupe carboxyle (composant a2) est l'acrylate de β-carboxyéthyle.

20. Copolymère d'acrylate pré-réticulé, soluble, selon l'une des revendications 3, 4 ou 5, caractérisé par le fait que sont utilisés, comme momomères contenant des groupes hydroxyle, des produits de réaction de l'acide acrylique et/ou de l'acide méthacrylique avec l'ester glycidylique d'un acide carboxylique ayant un atome de carbone en α tertiaire.

21. Copolymère d'acrylate pré-réticulé, soluble, selon l'une des revendications 1 à 20, caractérisé par le fait les autres monomères polymérisables ayant une double liaison d'insaturation oléfinique sont choisis dans le groupe du styrène, du vinyltoluène, de esters alkyliques de l'acide acrylique et de l'acide méthacrylique, des acrylates d'alcoxyéthyle et des acrylates d'acryloxyéthyle et les méthacrylates correspondants, les esters de l'acide maléique et de l'acide fumarique.

22. Copolymère d'acrylate pré-réticulé, soluble, selon l'une des revendications 1 à 21, caractérisé par le fait que la polymérisation est conduit en présence d'une polyoléfine chlorée, le rapport acrylate à polyoléfine pouvant s'élever à une valeur de 98:2 à 30:70.

23. Procédé de fabrication du copolymère d'acrylate pré-réticulé, soluble, selon l'une des revendications 1, 2, 3 ou 4, caractérisé par le fait que, pour sa fabrication, on copolymérise les monomères dans un solvant organique, à une température de 70 à 130°C, de préférence, à une température de 80 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, pour obtenir un produit pré-réticulé, non-gélifié, la polymérisation en vue de la préparation

du copolymère d'acrylate étant conduite de telle sorte qu'il en résulte une solution du polymère ayant une teneur en corps solides de 40 à 65% en poids.

24. Procédé de fabrication du copolymère d'acrylate soluble, selon la revendication 5, caractérisé par le fait que, pour sa préparation, on copolymérise tout d'abord les monomères dans un solvant organique, à une température de 70 à 130°C, de préférence, à une température de 80 à 120°C, avec utilisation d'au moins 0,5% en poids, de préférence, d'au moins 2,5% en poids, par rapport au poids total de tous les momomères, d'un régulateur de polymérisation, et avec utilisation d'initiateurs de polymérisation, pour obtenir un produit pré-réticulé, non-gélifié, la polymérisation en vue de la préparation du copolymère d'acrylate étant conduite de telle sorte qu'il en résulte une solution du polymère ayant une teneur en corps solides allant de 40 à 65% en poids, et, après l'achèvement de la copolymérisation, a lieu la réaction avec les anhydrides d'acides carboxyliques cycliques (a6).

25. Procédé de fabrication du copolymère d'acrylate soluble, selon l'une des revendications 6, 7 ou 8, caractérisé par le fait que, pour sa préparation, on copolymérise tout d'abord les monomères dans un solvant organique, à une température de 70 à 130°C, de préférence, à une température de 80 à 120°C, avec utilisation d'au moins 0,5% en poids, de préférence, d'au moins 2,5% en poids, par rapport au poids total de tous les momomères, d'un régulateur de polymérisation, et avec utilisation d'initiateurs de polymérisation, pour obtenir un produit pré-réticulé, non-gélifié, la polymérisation en vue de la préparation du copolymère d'acrylate étant conduite de telle sorte qu'il en résulte une solution du polymère ayant une teneur en corps solides allant de 40 à 65% en poids, comme régulateurs sont exclus les mercaptans ayant des groupes SH primaires, et, après l'acèvement de la réaction de copolymérisation, a lieu la réaction du copolymère avec les composés (a8).

26. Procédé de fabrication du copolymère d'acrylate soluble, selon la revendication 9, caractérisé par le fait que, pour sa préparation, on copolymérise tout d'abord les monomères dans un solvant organique, à une température de 70°C à 130°C, de préférence, à une température de 80°C à 120°C, avec utilisation d'au moins 0,5% en poids, de préférence, d'au moins 2,5% en poids, par rapport au poids total de tous les momomères, d'un régulateur de polymérisation, à l'exclusion des acides thiocarboxyliques, et avec utilisation d'initiateurs de polymérisation, pour obtenir un produit pré-réticulé, non-gélifié, la polymérisation en vue de la préparation du copolymère d'acrylate étant conduite de telle sorte qu'il en résulte une solution du polymère ayant une teneur en corps solides allant de 40 à 65% en poids, et, après l'achèvement de la réaction de copolymérisation, a lieu la réaction avec a10) et/ou a11) et avec a6).

27. Procédé selon l'une des revendications 23 ou 24, caractérisé par le fait qu'on utilise, comme régulateur de polymérisation, des composés contenant des groupes mercapto, de préférence, du mercaptoéthanol.

28. Procédé selon la revendication 25, caractérisé par le fait qu'on utilise, comme régulateur, des composés contenant des groupes mercapto, à l'exclusion des mercaptans ayant des groupes SH primaires.

29. Procédé selon l'une des revendications 23 à 28, caractérisé par le fait qu'on utilise, comme initiateurs, des composés azoïques et/ou des peroxyesters.

30. Agent de revêtement, contenant, comme liant essentiel,

A) un copolymère d'acrylate, préparé par le procédé tel que défini à l'une des revendications 23 à 29, et

B) un composé contenant au moins deux groupes époxyde par molécule

le rapport de A) et B) étant choisi de telle sorte que le rapport des groupes acide de A) aux groupes époxyde de B) se situe dans la plage allant de 0,5:3 à 2:0,5 et, le cas échéant, on utilise un catalyseur de réticulation.

31. Agent de revêtement selon la revendication 30, caractérisé par le fait que le catalyseur de réticulation est utilisé dans une quantité allant de 0,5 à 10% en poids, par rapport au poids du composant di- ou polyépoxydique.

32. Procédé de fabrication d'un agent de revêtement selon l'une des revendications 30 ou 31, caractérisé par le fait que, pour sa préparation, on fabrique un copolymére d'acrylate A) tel que défini à l'une des revendications 23 à 29, et on transforme celui-ci en une masse de revêtement, par mélange et, le cas échéant, dispersion, avec B), un composé, qui contient au moins deux groupes époxyde par molécule, le cas échéant avec co-utilisation d'un catalyseur de réticulation, de même qu'avec des solvants organiques, le cas échéant, des pigments et des adjuvants et additifs usuels, le rapport de A) à B) étant choisi de telle sorte que le rapport des groupes acide A) aux groupes époxyde de B) se situe dans la plage allant de 0,5:3 à 2:0,5.

33. Procédé de fabrication d'un revêtement suivant lequel on applique sur un substrat un agent de revêtement tel que défini à l'une des revendications 30 ou 31, par pulvérisation, coulée, immersion, laminage, raclage ou peinture, sous la forme d'un film, et qu'on fait durcir le film en un revêtement adhérent.

34. Substrat revêtu, obtenu par le procédé tel que défini à la revendication 33.

**Claims**

1. Soluble pre-crosslinked acrylate copolymer obtainable by copolymerization of monomers with at least two polymerizable, olefinically unsaturated double bonds, monomers which carry functional groups and other polymerizable monomers with an olefinically unsaturated double bond, the acrylate copolymer containing carboxyl groups, characterized in that, for its preparation,

a1) 5 to 30% by weight of a monomer with at least two polymerizable, olefinically unsaturated double bonds,

a2) 3 to 30% by weight, preferably 5 to 20% by weight, of a monomer containing carboxyl groups and

a3) at least 40% by weight of other monomers with a polymerizable, olefinically unsaturated double bond,

the sum of a1), a2) and a3) being 100% by weight, are copolymerized in an organic solvent at 70 to 130°C, preferably at 80 to 120°C, using at least 0.5% by weight, preferably at least 2.5% by weight, based on the total weight of the monomers, of a polymerization regulator and using polymerization initiators, the polymerization is carried out so that a solution of the polymer having a solids content of 40 to 65% by weight results, and the acid number of the acrylate copolymer is 15 to 200, preferably 30 to 120.

2. Soluble pre-crosslinked acrylate copolymer according to Claim 1, characterized in that 0.1 to 5% by weight, based on the total weight of all the monomers, of monomers with a phosphoric acid groups are employed as other monomers with a polymerizable, olefinically unsaturated double bond.

3. Soluble pre-crosslinked acrylate copolymer obtainable by copolymerization of monomers with at least two polymerizable, olefinically unsaturated double bonds, monomers carrying functional groups and other polymerizable monomers with an olefinically unsaturated double bond, the acrylate copolymer containing carboxyl groups, characterized in that, for its preparation,

a1) more than 3 to 30% by weight, preferably 5 to 25% by weight, of a monomer with at least two polymerizable, olefinically unsaturated double bonds, di- and polyesters of di- and polyols with acrylic acid being excluded,

a2) 3 to 30% by weight, preferably 5 to 20% by weight, of a monomer containing carboxyl groups,

a4) 0.1 to 20% by weight, preferably 1 to 14% by weight, of a tertiary amine with a polymerizable, olefinically unsaturated double bond,

a5) 0 to 40% by weight, preferably 5 to 25% by weight, of a monomer containing hydroxyl groups and

a3) 0 to 80% by weight of other monomers with a polymerizable, olefinically unsaturated double bond,

the sum of components a1), a2), a3), a4) and a5) being 100% by weight, are copolymerized in an organic solvent at 70 to 130°C, preferably at 80 to 120°C, using at least 0.5% by weight, preferably at least 2.5% by weight, based on the total weight of the monomers, of a polymerization regulator and using polymerization initiators, the polymerization is carried out so that a solution of the polymer having a solids content of 40 to 65% by weight results and the acid number of the acrylate copolymer is 15 to 200, preferably 30 to 120.

4. Soluble, pre-crosslinked acrylate copolymer according to Claim 3, characterized in that 0.1 to 5% by weight, based on the total weight of all the monomers, of monomers with phosphoric acid groups are employed as other monomers with a polymerizable, olefinically unsaturated double bond.

5. Soluble pre-crosslinked acrylate copolymer, obtainable by copolymerization of monomers with at least two polymerizable, olefinically unsaturated double bonds, monomers which carry functional groups and other polymerizable monomers with an olefinically unsaturated double bond, the acrylate copolymer containing carboxyl groups, characterized in that, for its preparation,

a1) more than 3 to 30% by weight, preferably 5 to 25% by weight, of a monomer with at least two polymerizable, olefinically unsaturated double bonds, di- and polyesters of di- and polyols with acrylic acid being excluded,

a4) 0.1 to 20% by weight, preferably 1 to 14% by weight, of a tertiary amine with a polymerizable, olefinically unsaturated double bond,

a5) 5 to 40% by weight, preferably 10 to 30% by weight, of monomers containing hydroxyl groups and

a3) 0 to 80% by weight of other polymerizable monomers with an olefinically unsaturated double bond,

the sum of a1), a3), a4) and a5) being 100% by weight are copolymerized in an organic solvent at 70 to 130°C, preferably at 80 to 120°C, using at least 0.5% by weight, preferably at least 2.5% by weight, based on the total weight of the monomers, of a polymerization regulator and using polymerization initiators, the polymerization is carried out so that a solids content of the solution of the polymer of 40 to 65% by weight results, and when the copolymerization has ended, the reaction with a6) cyclic carboxylic acid anhydrides is carried out, and the acid number of the acrylate copolymer is 15 to 200, preferably 30 to 120.

6. Soluble, pre-crosslinked acrylate copolymer obtainable by copolymerization of monomers with at least two polymerizable, olefinically unsaturated double bonds, monomers which carry functional groups and other polymerizable monomers with an olefinically unsaturated double bond, the acrylate copolymer containing carboxyl groups, characterized in that, for its preparation,

a1) more than 3 to 30% by weight, preferably 5 to 25% by weight, of monomers with at least two polymerizable olefinically unsaturated double bonds,

a7) 1 to 25% by weight, preferably 3 to 15% by weight, of monomers with cyclic carboxylic acid anhydride groups and

a3) 45 to 80% by weight of other polymerizable monomers with an olefinically unsaturated double bond,

the sum of a1), a3) and a7) being 100% by weight, are copolymerized in an organic solvent at 70 to 130°C, preferably at 80 to 120°C, using at least 0.5% by weight, preferably at least 2.5% by weight, based on the total weight of the monomers, of a polymerization regulator and using polymerization initiators, the polymerization for the preparation of the copolymer is carried out so that a solution of the polymer having a

solids content of 40 to 65% by weight results, and when the copolymerization reaction has ended, the reaction of the copolymer with

a8) compounds which contain both at least one hydrogen which can react with acid anhydride groups and at least one tertiary amino group, and if appropriate with monofunctional compounds containing active hydrogen,

is carried out and the acid number of the acrylate copoolymer is 15 to 200, preferably 30 to 120.

7. Soluble pre-crosslinked acrylate copolymer according to Claim 6, characterized in that component a8) is an alcohol which contains a tertiary amino group.

8. Soluble pre-crosslinked acrylate copolymer according to Claim 6 or 7, characterized in that component a8) is a primary or secondary amine with a tertiary amino group.

9. Soluble pre-crosslinked acrylate copolymer, obtainable by copolymerization of monomers with at least two polymerizable, olefinically unsaturated double bonds, monomers which carry functional groups and other polymerizable monomers with an olefinically unsaturated double bond, the acrylate copolymer containing carboxyl groups, characterized in that, for its preparation,

a1) more than 3 to 30% by weight, preferably 5 to 25% by weight, of monomers with at least two polymerizable, olefinically unsaturated double bonds,

a9) 1 to 30% by weight of glycidyl esters of ethylenically unsaturated carboxylic acids and/or glycidyl ethers of olefinically unsaturated compounds and

a3) 40 to 95% by weight of other polymerizable monomers with an olefinically unsaturated double bond,

the sum of all the monomers being 100% by weight, are copolymerized in an organic solvent at 70 to 130°C, preferably at 80 to 120°C, using at least 0.5% by weight, preferably at least 2.5% by weight, based on the total weight of the monomers, of a polymerization regulator and using polymerization initiators, the polymerization for the preparation of the copolymer is carried out so that a solution of the polymer having a solids content of 40 to 65% by weight results, and when the copolymerization reaction has ended, the reaction with

a10) amines with a secondary amino group or di- or polyamines with at least one tertiary amino group and one primary or secondary amino group and/or

a11) carboxylic acids which contain a tertiary nitrogen atom and

a6) cyclic carboxylic acid anhydrides

is carried out and the acid number of the acrylate copolymer is 15 to 200, preferably 30 to 120.

10. Soluble pre-crosslinked acrylate copolymer according to Claim 3, 4 or 5, characterized in that the monomer with at least 2 polymerizable, olefinically unsaturated double bonds corresponds to the formula

$$CH_2=\overset{\overset{CH_3}{|}}{C}-\overset{\overset{O}{\|}}{C}-X-(CH_2)_n-X-\overset{\overset{O}{\|}}{C}-\overset{\overset{CH_3}{|}}{C}=CH_2$$

in which: X = O, NR' or S, where R' = H, alkyl or aryl, and n = 2 to 8.

11. Soluble pre-crosslinked acrylate copolymer according to Claim 1, 2, 6, 7, 8 or 9, characterized in that the monomer with at least two polymerizable, olefinically unsaturated double bonds corresponds to the general formula

$$CH_2=\overset{\overset{R}{|}}{C}-\overset{\overset{O}{\|}}{C}-X-(CH_2)_n-X-\overset{\overset{O}{\|}}{C}-\overset{\overset{R}{|}}{C}=CH_2$$

in which: R = H or $CH_3$, X = O, NR' or S, where R' = H, alkyl or acryl (sic), and n = 2 or 8.

12. Soluble pre-crosslinked acrylate copolymer according to Claim 3, 4 or 5, characterized in that the monomer with at least two polymerizable, olefinically unsaturated double bonds is a reaction product of a carboxylic acid with a polymerizable, olefinically unsaturated double bond, excluding acrylic acid, and glycidyl methacrylate.

13. Soluble pre-crosslinked acrylate copolymer according to Claim 1, 2, 6, 7, 8 or 9, characterized in that the monomer with at least two polymerizable, olefinically unsaturated double bonds is a reaction product of a carboxylic acid with a polymerizable, olefinically unsaturated double bond and glycidyl acrylate and/or glycidyl methacrylate.

14. Soluble pre-crosslinked acrylate copolymer according to Claim 3, 4 or 5, characterized in that the monomer with at least two polymerizable olefinically unsaturated double bonds is a polycarboxylic acid or unsaturated monocarboxylic acid esterified with unsaturated alcohol containing a polymerizable double bond, excluding derivatives of acrylic acid.

15. Soluble pre-crosslinked acrylate copolymer according to Claim 1, 2, 6, 7, 8 or 9, characterized in that the monomer with at least two polymerizable, olefinically unsaturated double bonds is a polycarboxylic acid or unsaturated monocarboxylic acid esterified with an unsaturated alcohol containing a polymerizable double bond.

16. Soluble pre-crosslinked acrylate copolymer according to one of Claims 1 to 9, characterized in that the monomer with at least two polymerizable, olefinically unsaturated double bonds can be prepared by

reaction of a polyisocyanate with alcohols or amines containing unsaturated, polymerizable double bonds.

17. Soluble pre-crosslinked acrylate copolymer according to Claim 3, 4 or 5, characterized in that the monomer with at least two polymerizable, olefinically unsaturated double bonds is a diester of polyethylene glycol and/or polypropylene glycol with an average molecular weight of less than 1,500, preferably less than 1,000, and methacrylic acid.

18. Soluble pre-crosslinked acrylate copolymer according to Claim 1, 2, 6, 7, 8 or 9, characterized in that the monomer with at least two polymerizable, olefinically unsaturated double bonds is a diester of polyethylene glycol and/or polypropylene glycol with an average molecular weight of less than 1,500, preferably less than 1,000, and acrylic acid and/or methacrylic acid.

19. Soluble pre-crosslinked acrylate copolymer according to Claim 1, 2, 3 or 4, characterized in that the monomer containing cabroxyl groups (component $a_2$ (sic)) is β-carboxyethyl acrylate.

20. Soluble pre-crosslinked acrylate copolymer according to Claim 3, 4 or 5, characterized in that reaction products of acrylic acid and/or methacrylic acid with the glycidyl ester of a carboxylic acid with a tertiary α-carbon atom is (sic) employed as the monomers containing hydroxyl groups.

21. Soluble pre-crosslinked acrylate copolymer according to one of Claims 1 to 20, characterized in that the other polymerizable monomers with an olefinically unsaturated double bond are chosen from the group comprising styrene, vinyltoluene, alkyl esters of acrylic acid and methacrylic acid, alkoxyethyl acrylates and aryloxyethyl acrylates and the corresponding methacrylates an esters of maleic and fumaric acid.

22. Soluble pre-crosslinked acrylate copolymer according to any one of Claims 1 to 21, characterized in that the polymerization is carried out in the presence of a chlorinated polyolefin, it being possible for the ratio of acrylate to polyolefin to be 98:2 to 30:70.

23. Process for the preparation of the soluble precrosslinked acrylate copolymer according to Claim 1, 2, 3 or 4, characterized in that, for its preparation, the monomers are copolymerized in an organic solvent at 70°C to 130°C, preferably at 80°C to 120°C, using at least 0.5% by weight, preferably at least 2.5% by weight, based on the total weight of the monomers, of a polymerization regulator and using polymerization initiators to give a pre-crosslinked, non-gelled product, the polymerization for the preparation of the acrylate copolymer being carried out so that a solution of the polymer having a solids content of 40 to 65% by weight results.

24. Process for the preparation of the soluble acrylate copolymer according to Claim 5, characterized in that, for its preparation, the monomers are first copolymerized in an organic solvent at 70°C to 130°C, preferably at 80°C to 120°C, using at least 0.5% by weight, preferably at least 2.5% by weight, based on the total weight of all the monomers, of a polymerization regulator and using polymerization initiators to give a pre-crosslinked, non-gelled product, the polymerization for the preparation of the acrylate copolymer being carried out so that a solution of the polymer having a solids content of 40 to 65% by weight results, and when the copolymerization has ended, the reaction with the cyclic carboxylic acid anhydrides (a6) is carried out.

25. Process for the preparation of the soluble acrylate copolymer according to Claim 6, 7 or 8, characterized in that, for its preparation, the monomers are first copolymerized in an organic solvent at 70°C to 130°C, preferably at 80°C to 120°C, using at least 0.5% by weight, preferably at least 2.5% by weight, based on the total weight of the monomers, of a polymerization regulator and using polymerization initiators to give a pre-crosslinked, non-gelled product, the polymerization for the preparation of the acrylate copolymer being carried out so that a solution of the polymer having a solids content of 40 to 65% by weight results, mercaptans with primary SH groups being excluded as regulators, and when the copolymerization reaction has ended, the reaction of the copolymer with the compunds a8) is carried out.

26. Process for the preparation of the soluble acrylate copolymer according to Claim 9, characterized in that, for its preparation, the monomers are first copolymerized in an organic solvent at 70°C to 130°C, preferably at 80°C to 120°C, using at least 0.5% by weight, preferably at least 2.5% by weight, based on the total weight of the monomers, of a polymerization regulator, thiocarboxylic acids being excluded, and using polymerization initiators, to give a pre-crosslinked, non-gelled product, the polymerization for the preparation of the acrylate copolymer being carried out so that a solution of the polymer having a solids content of 40 to 65% by weight results, and when the copolymerization reaction has ended, the reaction with a10) and/or a11) and with a6) is carried out.

27. Process according to Claim 23 or 24, characterized in that compounds containing mercapto groups, preferably mercaptoethanol, are used as polymerization regulators.

28. Process according to Claim 25, characterized in that compounds containing mercapto groups, apart from mercaptans with primary SH groups, are used as regulators.

29. Process according to one of Claims 23 to 28, characterized in that azo compounds and/or peroxyesters are used as initiators.

30. Coating agent containing, as the essential binder,

A) an acrylate copolymer prepared by the processes according to one of Claims 23 to 29 and

B) a compound containing at least two epoxide groups per molecule,

the ratio of A) to B) being chosen so that the ratio of the acid groups of A to the epoxide groups of B is in the range from 0.5:3 to 2:0.5, and a crosslinking catalyst being used if appropriate.

31. Coating agent according to Claim 30, characterized in that the crosslinking catalyst is used in an amount of 0.5 to 10% by weight, based on the weight of the di- or polyepoxide component.

32. Process for the preparation of a coating agent according to Claim 30 to 31, characterized in that, for its preparation, an acrylate copolymer A) is prepared according to Claim 23 to 29 and this is processed with B), a compound which contains at least two epoxide groups per molecule, if appropriate also using a crosslinking catalyst, and with organic solvents, if appropriate pigments and customary auxiliaries and additives, by mixing and if appropriate dispersing, to give a coating composition, the ratio of A) to B) being chosen so that the ratio of the acid groups of A) to the epoxide groups of B) is in the range from 0.5:3 to 2:0.5.

33. Process for the production of a coating, in which a coating agent according to Claim 30 to 31 is applied in the form of a film by spraying, flooding, dipping, rolling, knife-coating or brushing onto a substrate, and the film is hardened to a firmly adhering coating.

34. Coated substrate obtained by the process according to Claim 33.